# EUROPEAN PATENT APPLICATION

(11) **EP 4 203 354 A1**
(43) Date of publication of application: **28.06.2023**
(21) Application number: 20953742.2
(22) Date of filing: 18.09.2020
(51) Int. Cl.: H04L 1/00

(54) **LINE CODING METHOD AND DEVICE**

(71) Applicant: Huawei Technologies Co., Ltd., Shenzhen, Guangdong 518129 (CN)
(72) Inventor: ZHANG, Xingxin, Shenzhen, Guangdong 518129 (CN); LI, Chao, Shenzhen, Guangdong 518129 (CN)
(74) Representative: Pfenning, Meinig & Partner mbB
(86) International application number: PCT/CN2020/116325
(87) International publication number: WO 2022/056884

(57) **Abstract**

This application discloses a line coding method and an apparatus, to resolve a problem that processing complexity of data frames is high with a long delay and low accuracy in a current line coding scheme. The method includes: generating and sending a target code block, where the target code block includes an indicator bit and a payload, the indicator bit includes a first value, a second value, a third value, and a fourth value, the first value is used to indicate that the payload includes the first segment of a data frame, the second value is used to indicate that the payload includes an intermediate segment of the data frame, the third value indicates that the payload includes the last segment of the data frame, and the fourth value is used to indicate that the payload includes non-data information. In embodiments of this application, a start location and an end location of the data frame are decoupled from a block type field, and are directly indicated by the indicator bit. This can simplify data processing complexity, to reduce complexity and a delay of wired transmission.

## Description

### TECHNICAL FIELD

This application relates to the field of communication technologies, and in particular, to a line coding method and an apparatus.

### BACKGROUND

In wired transmission, line coding is usually used to indicate a type, a location, and the like of code block data, for example, a 64-bit (bit, B)/66B coding scheme or a 64B/65B coding scheme.

For a code block through line coding such as 64B/66B and 64B/65B, a synchronization field is used to indicate whether a subsequent 64B carries control information. If the subsequent 64B carries the control information, an 8B block type field in the 64B indicates a format of another 56B. For example, when a value of the block type field is 0x1e, the 56B includes eight 7B control sub-blocks, and each control sub-block is used to carry one piece of control information. For another example, when a value of the block type field is 0x33, the 56B includes four 7B control sub-blocks and three 8B data sub-blocks. The data sub-block is used to carry data information, and the first data sub-block is a start of a data frame. For still another example, when a value of the block type field is 0x78, the 56B includes seven 8B data sub-blocks, and the first data sub-block is a start of a data frame. For yet another example, when a value of the block type field is 0xff, the 56B includes seven 8B data sub-blocks, and the last data sub-block is an end of a data frame.

In a current line coding scheme, start and end indications of a data frame depend on further parsing of a block type field. Because the block type field has a plurality of values, processing complexity of the block type field is higher than that of data. In addition, if the block type field is incorrect, a start location of the data frame may be lost.

### SUMMARY

This application provides a line coding method and an apparatus, to resolve a problem that processing complexity of data frames is high with a long delay and low accuracy in a current line coding scheme.

According to a first aspect, an embodiment of this application provides a line coding method. The method includes: generating and sending a target code block, where the target code block includes an indicator bit and a payload, the indicator bit includes a first value, a second value, a third value, and a fourth value, the first value is used to indicate that the payload includes the first segment of a data frame, the second value is used to indicate that the payload includes an intermediate segment of the data frame, the third value indicates that the payload includes the last segment of the data frame, and the fourth value is used to indicate that the payload includes non-data information. The data frame generally refers to a packet in a specific frame format, for example, an Ethernet (Ethernet) media access control (media access control, MAC) frame or an internet protocol (internet protocol, IP) frame. A specific type of the data frame is not limited in embodiments of this application.

In embodiments of this application, the first segment (namely, a start of the data frame), the last segment (namely, an end of the data frame), and the intermediate segment (namely, a continuation of the data frame) of the data frame are directly indicated by the indicator bit, and data/control is indicated by a synchronization word. In comparison with a manner in which a block type field is used to indicate a payload format, a start location and an end location of the data frame are decoupled from the block type field, and are directly indicated by the indicator bit. This can simplify data processing complexity, to reduce complexity and a delay of wired transmission.

In a possible design, when the target code block is generated, the data frame may be divided into N segments, where N is an integer greater than 1; and the N segments are encoded to obtain N code blocks, where the N code blocks include the target code block, and if the payload of the target code block includes the first segment in the N segments, the indicator bit of the target code block is the first value; if the payload of the target code block includes an n^{th} segment in the N segments, the indicator bit of the target code block is the second value, and n is an integer greater than 1 and less than N; or if the payload of the target code block includes an N^{th} segment in the N segments, the indicator bit of the target code block is the third value. In the foregoing design, when each segment of the data frame is sent, a value of an indicator bit of a code block of each segment is carried. In this way, a receiving node can determine a location of the segment carried in the code block in the data frame, so that received segments can be spliced, to obtain a complete data frame.

In a possible design, the N segments may have an equal length.

In a possible design, the non-data information includes at least one of the following: a padding bit, a sub-indicator bit, and control information. In the foregoing design, the payload may carry a plurality of types of control information, padding, and the like, so that the code block can support complex control information.

In a possible design, if a bit carried in the payload is the padding bit, the indicator bit is the fourth value.

In a possible design, the indicator bit is the fourth value, and the payload carries the sub-indicator bit. The sub-indicator bit is used to indicate that the payload carries the physical layer padding bit; or the sub-indicator bit is used to indicate that the payload carries the control information; or the sub-indicator bit is used to indicate that the payload carries the data frame. In the foregoing design, the payload may carry a plurality of types of control information, a complete data frame with a small data amount, padding, and the like, and content carried in the payload may be further indicated by the sub-indicator bit, so that the code block can support complex control information, and indication flexibility can be improved. In addition, the payload supports carrying the complete data frame with the small data amount, so that transmission overheads of the data frame with the small data amount are reduced, insertion of the complete data frame with the small data amount between segments of the data frame is enabled, and a transmission delay of the complete data frame with the small data amount is reduced.

In a possible design, the sub-indicator bit may further indicate a type of the control information carried in the payload. In the foregoing design, the content carried in the payload may be further indicated by the sub-indicator bit, so that indication flexibility can be improved.

In a possible design, a type of the control information includes at least one of the following: block identification information, transmission acknowledgment information, intermittent test information, sleep information, and link retraining information.

In a possible design, if the payload carries the control information, the payload further includes a cyclic redundancy check CRC field used for check protection. In the foregoing design, reliability of the control information can be ensured by using the CRC field, so that error control can be avoided.

According to a second aspect, an embodiment of this application provides a line coding method. The method includes: generating and sending a target code block, where the target code block includes an indicator bit and a payload, the indicator bit includes a first value and a second value, the first value is used to indicate that the payload includes one segment of a first data frame, and the second value is used to indicate that the payload includes non-data information; and if the indicator bit is the second value, the payload includes a sub-indicator bit, and the sub-indicator bit is used to indicate at least one of the following information: a next code block of the target code block carries the first segment of the first data frame; a previous code block of the target code block carries the last segment of the first data frame; a bit carried in the payload of the target code block is a physical layer padding bit; the payload of the target code block carries control information; the payload of the target code block carries the first data frame; and the first data frame and at least one second data frame are spliced in the payload of the target code block. The data frame generally refers to a packet in a specific frame format, for example, an Ethernet MAC frame or an IP frame. A specific type of the data frame is not limited in embodiments of this application.

In embodiments of this application, the sub-indicator bit is used to indicate a start or an end of the data frame, so that overheads of the indicator bit can be reduced. In addition, a code block indicating the start of the data frame and a code block indicating the end of the data frame are respectively inserted before the first segment and after the last segment of the data frame. In comparison with a manner in which a block type field indicates a payload format, the sub-indicator bit directly indicates the start or the end of the data frame. This can simplify data processing complexity, to reduce a delay of wired transmission.

In a possible design, if the next code block of the target code block carries the first segment of the first data frame, the bit carried in the payload is the physical layer padding bit, and the sub-indicator bit indicates that the next code block of the target code block carries the first segment of the first data frame. In the foregoing design, one code block is inserted before the code block carrying the first segment, and the code block may indicate the start of the data frame by using a value of the sub-indicator bit. This can simplify data processing complexity, to reduce complexity and a delay of wired transmission.

In a possible design, if the previous code block of the target code block carries the last segment of the first data frame, the bit carried in the payload is the physical layer padding bit, and the sub-indicator bit indicates that the previous code block of the target code block carries the last segment of the first data frame. In the foregoing design, one code block is inserted before the code block carrying the last segment, and the code block may indicate the end of the data frame by using a value of the sub-indicator bit. This can simplify data processing complexity, to reduce complexity and a delay of wired transmission.

In a possible design, if the bit carried in the payload of the target code block is the physical layer padding bit, the sub-indicator bit indicates that the bit carried in the payload of the target code block is the physical layer padding bit.

In a possible design, if the payload of the target code block carries the control information, the sub-indicator bit indicates that the payload carries the control information. In the foregoing design, the payload may carry a plurality of types of control information, so that the code block can support complex control information, and indication flexibility can be improved.

In a possible design, the sub-control bit further indicates a type of the control information. In the foregoing design, content carried in the payload may be further indicated by the sub-indicator bit, so that indication flexibility can be improved.

In a possible design, if the payload of the target code block carries the first data frame, the sub-indicator bit indicates that the payload of the target code block carries the first data frame. According to the foregoing design, the payload supports carrying a complete data frame with a small data amount, so that transmission overheads of the data frame with the small data amount are reduced, insertion of the complete data frame with the small data amount between segments of the data frame is enabled, and a transmission delay of the complete data frame with the small data amount is reduced.

In a possible design, if the payload of the target code block carries all or a part of data of the first data frame and all or a part of data of the at least one second data frame, the sub-indicator bit indicates that the first data frame and the at least one second data frame are spliced. According to the foregoing design, the payload supports splicing of two or more data frames, so that data transmission flexibility can be improved.

In a possible design, a type of the control information includes at least one of the following: block identification information, transmission acknowledgment information, intermittent test information, sleep information, and link retraining information.

In a possible design, when the target code block is generated, the first data frame may be divided into N segments, where N is an integer greater than 1; and the N data blocks are encoded to obtain N+2 code blocks, where the N+2 code blocks include the target code block, and if the target code block is the first code block in the N+2 code blocks, the indicator bit of the target code block is the second value, and the sub-indicator bit is used to indicate that the next code block of the target code block carries the first segment of the first data frame; if the target code block is an n^{th} code block in N+2 code blocks, the indicator bit of the target code block is the first value, and n is an integer greater than 1 and less than N+2; or if the target code block is an (N+2)^{th} code block in the N+2 code blocks, the indicator bit of the target code block is the second value, and the sub-indicator bit is used to indicate that the previous code block of the target code block carries the last segment of the first data frame.

In the foregoing design, when each segment of the data frame is sent, a value of an indicator bit of a code block of each segment and values of sub-indicator bits of previous and next code blocks are carried. In this way, a receiving node can determine a location of the segment carried in the code block in the data frame, so that received segments can be spliced, to obtain a complete data frame.

In a possible design, the N segments may have an equal length.

In a possible design, if the sub-indicator bit indicates that the payload of the target code block carries the control information, the payload includes a CRC field used for check protection. In the foregoing design, the payload includes the CRC field, so that reliability of the control information can be ensured, thereby avoiding error control.

In a possible design, if the sub-indicator bit indicates that the next code block of the target code block carries the first segment of the first data frame, or the sub-indicator bit indicates that the previous code block of the target code block carries the last segment of the first data frame, the payload includes a CRC field used for check protection. In the foregoing design, the payload includes the CRC field, so that reliability of the code block indicating the start and the end of the data frame can be ensured, thereby avoiding an error indication.

In a possible design, that the sub-indicator bit indicates that the first data frame and the at least one second data frame are spliced includes: The sub-indicator bit further indicates a boundary location of the first data frame and the at least one second data frame in the payload. According to the foregoing design, accuracy of data transmission can be improved.

In a possible design, all or a part of data of the first data frame and all or a part of data of the at least one second data frame include: the first segment of one second data frame and the first data frame, where the first segment is after the first data frame. According to the foregoing design, splicing of one complete data frame with the first segment of another data frame may be supported.

In a possible design, all or a part of data of the first data frame and all or a part of data of the at least one second data frame include: the first segment of one second data frame and the last segment of the first data frame, where the first segment is after the last segment. According to the foregoing design, splicing of the last segment of one data frame with the first segment of another data frame may be supported.

In a possible design, all or a part of data of the first data frame and all or a part of data of the at least one second data frame include: the last segment of the first data frame and the at least one second data frame, where the at least one second data frame is after the last segment. According to the foregoing design, splicing of the last segment of one data frame with another complete data frame may be supported.

In a possible design, all or a part of data of the first data frame and all or a part of data of the at least one second data frame include: the first data frame and the at least one second data frame, where the at least one second data frame is after the first data frame. According to the foregoing design, splicing of one complete data frame with another complete data frame may be supported.

In a possible design, there is an interframe space between two adjacent data frames in the first data frame and the at least one second data frame. According to the foregoing design, there may be a buffer between two spliced data frames, to improve accuracy of data transmission.

According to a third aspect, an embodiment of this application provides a line coding method. The method includes: receiving and parsing a target code block, where the target code block includes an indicator bit and a payload, the indicator bit includes a first value, a second value, a third value, and a fourth value, the first value is used to indicate that the payload includes the first segment of a data frame, the second value is used to indicate that the payload includes an intermediate segment of the data frame, the third value indicates that the payload includes the last segment of the data frame, and the fourth value is used to indicate that the payload includes non-data information. The data frame generally refers to a packet in a specific frame format, for example, an Ethernet MAC frame or an IP frame. A specific type of the data frame is not limited in embodiments of this application.

In embodiments of this application, the first segment (namely, a start of the data frame), the last segment (namely, an end of the data frame), and the intermediate segment (namely, a continuation of the data frame) of the data frame are directly indicated by the indicator bit, and data/control is indicated by a synchronization word. In comparison with a manner in which a block type field is used to indicate a payload format, a start location and an end location of the data frame are decoupled from the block type field, and are directly indicated by the indicator bit. This can simplify data processing complexity, to reduce complexity and a delay of wired transmission.

In a possible design, when the target code block is parsed, if the indicator bit of the target code block is the first value, it may be determined that a segment carried in the payload of the target code block is the first segment of the data frame; if the indicator bit of the target code block is the second value, it may be determined that a segment carried in the payload of the target code block is the intermediate segment of the data frame; or if the indicator bit of the target code block is the third value, it may be determined that a segment carried in the payload of the target code block is the last segment of the data frame. In the foregoing design, when each segment of the data frame is sent, a value of an indicator bit of a code block of each segment is carried. In this way, a receiving node can determine a location of the segment carried in the code block in the data frame, so that received segments can be spliced, to obtain a complete data frame.

In a possible design, the N segments may have an equal length.

In a possible design, the non-data information includes at least one of the following: a padding bit, a sub-indicator bit, and control information. In the foregoing design, the payload may carry a plurality of types of control information, padding, and the like, so that the code block can support complex control information.

In a possible design, if a bit carried in the payload is the padding bit, the indicator bit is the fourth value.

In a possible design, the indicator bit is the fourth value, and the payload carries the sub-indicator bit. The sub-indicator bit is used to indicate that the payload carries the physical layer padding bit; or the sub-indicator bit is used to indicate that the payload carries the control information; or the sub-indicator bit is used to indicate that the payload carries the data frame. In the foregoing design, the payload may carry a plurality of types of control information, a complete data frame with a small data amount, padding, and the like, and content carried in the payload may be further indicated by the sub-indicator bit, so that the code block can support complex control information, and indication flexibility can be improved. In addition, the payload supports carrying the complete data frame with the small data amount, so that transmission overheads of the data frame with the small data amount are reduced, insertion of the complete data frame with the small data amount between segments of the data frame is enabled, and a transmission delay of the complete data frame with the small data amount is reduced.

In a possible design, the sub-indicator bit may further indicate a type of the control information carried in the payload. In the foregoing design, the content carried in the payload may be further indicated by the sub-indicator bit, so that indication flexibility can be improved.

In a possible design, a type of the control information includes at least one of the following: block identification information, transmission acknowledgment information, intermittent test information, sleep information, and link retraining information.

In a possible design, if the payload carries the control information, the payload further includes a cyclic redundancy check CRC field used for check protection. In the foregoing design, reliability of the control information can be ensured by using the CRC field, so that error control can be avoided.

According to a fourth aspect, an embodiment of this application provides a line coding method. The method includes: receiving and parsing a target code block, where the target code block includes an indicator bit and a payload, the indicator bit includes a first value and a second value, the first value is used to indicate that the payload includes one segment of a first data frame, and the second value is used to indicate that the payload includes non-data information; and if the indicator bit is the second value, the payload includes a sub-indicator bit, and the sub-indicator bit is used to indicate at least one of the following information: a next code block of the target code block carries the first segment of the first data frame; a previous code block of the target code block carries the last segment of the first data frame; a bit carried in the payload of the target code block is a physical layer padding bit; the payload of the target code block carries control information; the payload of the target code block carries the first data frame; and the first data frame and at least one second data frame are spliced in the payload of the target code block. The data frame generally refers to a packet in a specific frame format, for example, an Ethernet MAC frame or an IP frame. A specific type of the data frame is not limited in embodiments of this application.

In embodiments of this application, the sub-indicator bit is used to indicate a start or an end of the data frame, so that overheads of the indicator bit can be reduced. In addition, a code block indicating the start of the data frame and a code block indicating the end of the data frame are respectively inserted before the first segment and after the last segment of the data frame. In comparison with a manner in which a block type field indicates a payload format, the sub-indicator bit directly indicates the start or the end of the data frame. This can simplify data processing complexity, to reduce a delay of wired transmission.

In a possible design, if the next code block of the target code block carries the first segment of the first data frame, the bit carried in the payload is the physical layer padding bit, and the sub-indicator bit indicates that the next code block of the target code block carries the first segment of the first data frame. In the foregoing design, one code block is inserted before the code block carrying the first segment, and the code block may indicate the start of the data frame by using a value of the sub-indicator bit. This can simplify data processing complexity, to reduce complexity and a delay of wired transmission.

In a possible design, if the previous code block of the target code block carries the last segment of the first data frame, the bit carried in the payload is the physical layer padding bit, and the sub-indicator bit indicates that the previous code block of the target code block carries the last segment of the first data frame. In the foregoing design, one code block is inserted before the code block carrying the last segment, and the code block may indicate the end of the data frame by using a value of the sub-indicator bit. This can simplify data processing complexity, to reduce complexity and a delay of wired transmission.

In a possible design, if the bit carried in the payload of the target code block is the physical layer padding bit, the sub-indicator bit indicates that the bit carried in the payload of the target code block is the physical layer padding bit.

In a possible design, if the payload of the target code block carries the control information, the sub-indicator bit indicates that the payload carries the control information. In the foregoing design, the payload may carry a plurality of types of control information, so that the code block can support complex control information, and indication flexibility can be improved.

In a possible design, the sub-control bit further indicates a type of the control information. In the foregoing design, content carried in the payload may be further indicated by the sub-indicator bit, so that indication flexibility can be improved.

In a possible design, if the payload of the target code block carries the first data frame, the sub-indicator bit indicates that the payload of the target code block carries the first data frame. According to the foregoing design, the payload supports carrying a complete data frame with a small data amount, so that transmission overheads of the data frame with the small data amount are reduced, insertion of the complete data frame with the small data amount between segments of the data frame is enabled, and a transmission delay of the complete data frame with the small data amount is reduced.

In a possible design, if the payload of the target code block carries all or a part of data of the first data frame and all or a part of data of the at least one second data frame, the sub-indicator bit indicates that the first data frame and the at least one second data frame are spliced. According to the foregoing design, the payload supports splicing of two or more data frames, so that data transmission flexibility can be improved.

In a possible design, a type of the control information includes at least one of the following: block identification information, transmission acknowledgment information, intermittent test information, sleep information, and link retraining information.

In a possible design, when the target code block is parsed, if the indicator bit of the target code block is the second value, and the sub-indicator bit is used to indicate that the next code block of the target code block carries the first segment of the first data frame, it may be determined that a segment carried in the next code block of the target code block is the first segment of the first data frame; if the indicator bit of the target code block is the first value, it may be determined that a segment carried in the payload of the target code block is an intermediate segment of the first data frame; or if the indicator bit of the target code block is the second value, and the sub-indicator bit is used to indicate that the previous code block of the target code block carries the last segment of the first data frame, it may be determined that a segment carried in the previous code block of the target code block is the last segment of the first data frame.

In the foregoing design, when each segment of the data frame is sent, a value of an indicator bit of a code block of each segment and values of sub-indicator bits of previous and next code blocks are carried. In this way, a receiving node can determine a location of the segment carried in the code block in the data frame, so that received segments can be spliced, to obtain a complete data frame.

In a possible design, the N segments may have an equal length.

In a possible design, if the sub-indicator bit indicates that the payload of the target code block carries the control information, the payload includes a CRC field used for check protection. In the foregoing design, the payload includes the CRC field, so that reliability of the control information can be ensured, thereby avoiding error control.

In a possible design, if the sub-indicator bit indicates that the next code block of the target code block carries the first segment of the first data frame, or the sub-indicator bit indicates that the previous code block of the target code block carries the last segment of the first data frame, the payload includes a CRC field used for check protection. In the foregoing design, the payload includes the CRC field, so that reliability of the code block indicating the start and the end of the data frame can be ensured, thereby avoiding an error indication.

In a possible design, that the sub-indicator bit indicates that the first data frame and the at least one second data frame are spliced includes: The sub-indicator bit further indicates a boundary location of the first data frame and the at least one second data frame in the payload. According to the foregoing design, accuracy of data transmission can be improved.

In a possible design, all or a part of data of the first data frame and all or a part of data of the at least one second data frame include: the first segment of one second data frame and the first data frame, where the first segment is after the first data frame. According to the foregoing design, splicing of one complete data frame with the first segment of another data frame may be supported.

In a possible design, all or a part of data of the first data frame and all or a part of data of the at least one second data frame include: the first segment of one second data frame and the last segment of the first data frame, where the first segment is after the last segment. According to the foregoing design, splicing of the last segment of one data frame with the first segment of another data frame may be supported.

In a possible design, all or a part of data of the first data frame and all or a part of data of the at least one second data frame include: the last segment of the first data frame and the at least one second data frame, where the at least one second data frame is after the last segment. According to the foregoing design, splicing of the last segment of one data frame with another complete data frame may be supported.

In a possible design, all or a part of data of the first data frame and all or a part of data of the at least one second data frame include: the first data frame and the at least one second data frame, where the at least one second data frame is after the first data frame. According to the foregoing design, splicing of one complete data frame with another complete data frame may be supported.

In a possible design, there is an interframe space between two adjacent data frames in the first data frame and the at least one second data frame. According to the foregoing design, there may be a buffer between two spliced data frames, to improve accuracy of data transmission.

According to a fifth aspect, this application provides a line coding apparatus. The apparatus may be a communication device, or may be a chip or a chipset in the communication device. The communication device may be a sending node, or may be a receiving node. The apparatus may include a processing unit and a transceiver unit. When the apparatus is a communication device, the processing unit may be a processor, and the transceiver unit may be a transceiver. The apparatus may further include a storage module, and the storage module may be a memory. The storage module is configured to store instructions. The processing unit executes the instructions stored in the storage module, to perform a corresponding function according to the first aspect or a corresponding function according to the second aspect, or to perform a corresponding function according to the third aspect or a corresponding function according to the fourth aspect. When the apparatus is the chip or the chipset in the communication device, the processing unit may be a processor, and the transceiver unit may be an input/output interface, a pin, a circuit, or the like. The processing unit executes the instructions stored in the storage module, to perform a corresponding function according to the first aspect or a corresponding function according to the second aspect, or to perform a corresponding function according to the third aspect or a corresponding function according to the fourth aspect. The storage module may be a storage module (for example, a register or a cache) in the chip or the chipset, or may be a storage module (for example, a read-only memory or a random access memory) that is in the communication device and that is located outside the chip or the chipset.

According to a sixth aspect, this application provides a line coding apparatus. The apparatus includes a processor, and may further include a communication interface and a memory. The communication interface is used to transmit information, a message, and/or data between the apparatus and another apparatus. The memory is configured to store computer-executable instructions. When the apparatus runs, the processor executes the computer-executable instructions stored in the memory, so that the apparatus performs the method according to any one of the first aspect or the designs of the first aspect, any one of the second aspect or the designs of the second aspect, any one of the third aspect or the designs of the third aspect, or any one of the fourth aspect or the designs of the fourth aspect.

According to a seventh aspect, this application further provides a computer-readable storage medium. The computer-readable storage medium stores instructions. When the instructions are run on a computer, the computer is enabled to perform the method according to any one of the first aspect or the designs of the first aspect, any one of the second aspect or the designs of the second aspect, any one of the third aspect or the designs of the third aspect, or any one of the fourth aspect or the designs of the fourth aspect.

According to an eighth aspect, this application further provides a computer program product including instructions. When the computer program product runs on a computer, the computer is enabled to perform the method according to any one of the first aspect or the designs of the first aspect, any one of the second aspect or the designs of the second aspect, any one of the third aspect or the designs of the third aspect, or any one of the fourth aspect or the designs of the fourth aspect.

According to a ninth aspect, this application further provides a communication system. The system includes a sending node and a receiving node. The sending node may perform a corresponding function according to the first aspect, and the receiving node may perform a corresponding function according to the third aspect.

According to a tenth aspect, this application further provides a communication system. The system includes a sending node and a receiving node. The sending node may perform a corresponding function according to the second aspect, and the receiving node may perform a corresponding function according to the fourth aspect.

According to an eleventh aspect, an embodiment of this application provides a chip. The chip includes at least one processor and a communication interface. The processor is coupled to a memory, and is configured to read a computer program stored in the memory, to perform the method according to any one of the first aspect or the designs of the first aspect, any one of the second aspect or the designs of the second aspect, any one of the third aspect or the designs of the third aspect, or any one of the fourth aspect or the designs of the fourth aspect in embodiments of this application.

According to a twelfth aspect, an embodiment of this application provides a chip. The chip includes a communication interface and at least one processor. The processor runs to perform the method according to any one of the first aspect or the designs of the first aspect, any one of the second aspect or the designs of the second aspect, any one of the third aspect or the designs of the third aspect, or any one of the fourth aspect or the designs of the fourth aspect in embodiments of this application.

It should be noted that "coupling" in embodiments of this application indicates a direct combination or an indirect combination of two components.

### BRIEF DESCRIPTION OF DRAWINGS

FIG. 1 is a schematic diagram of 64B/66B line coding according to an embodiment of this application;
FIG. 2 is a schematic diagram of 64B/65B line coding according to an embodiment of this application;
FIG. 3 is a schematic flowchart of a line coding method according to an embodiment of this application;
FIG. 4 is a schematic diagram of a code block indicator bit according to an embodiment of this application;
FIG. 5 is a schematic diagram of transmission of a data frame according to an embodiment of this application;
FIG. 6 is a schematic diagram of transmission of a control code block according to an embodiment of this application;
FIG. 7 is a schematic diagram of a CRC block according to an embodiment of this application;
FIG. 8 is a schematic diagram of an intermittent test process according to an embodiment of this application;
FIG. 9 is a schematic diagram of a sleep process according to an embodiment of this application;
FIG. 10 is a schematic diagram of a link retraining process according to an embodiment of this application;
FIG. 11 is a schematic diagram of a code block sub-indicator bit according to an embodiment of this application;
FIG. 12 is a schematic diagram of a CRC field according to an embodiment of this application;
FIG. 13 is a schematic flowchart of another line coding method according to an embodiment of this application;
FIG. 14 is a schematic diagram of a code block according to an embodiment of this application;
FIG. 15 is a schematic diagram of transmission of a data frame according to an embodiment of this application;
FIG. 16 is a schematic diagram of transmission of a code block that carries control information according to an embodiment of this application;
FIG. 17 is a schematic diagram of a CRC field according to an embodiment of this application;
FIG. 18 is a schematic diagram of another CRC field according to an embodiment of this application;
FIG. 19 is a schematic diagram of a structure of a communication apparatus according to an embodiment of this application; and
FIG. 20 is a schematic diagram of a structure of another communication apparatus according to an embodiment of this application.

### DESCRIPTION OF EMBODIMENTS

The terms "include", "have" and any other variants in the specification, claims, and accompanying drawings in embodiments of this application mean to cover the non-exclusive inclusion, for example, a process, method, system, product, or device that includes a list of steps or units is not necessarily limited to those steps or units, but may include other steps or units not expressly listed or inherent to such a process, method, product, or device.

Embodiments of this application are applicable to wired high-speed point-to-point transmission, for example, image and control transmission from a camera to a self-driving platform multi-domain controller (multi-domain controller, MDC), and image transmission from a vehicle-mounted device like a vehicle-mounted camera or a cockpit domain controller (cockpit domain controller or control domain cockpit, CDC) to a large screen.

For example, a communication apparatus in embodiments of this application may be a device that can send information (such as a data frame and control information) to another device, for example, a vehicle-mounted image sensor like a camera or a laser radar, or may be an image processing device like an MDC or a CDC, or may be an image display device like a large screen. For another example, a communication apparatus in embodiments of this application may alternatively be another transmission device other than a vehicle-mounted apparatus.

In embodiments of this application, "at least one" means one or more, and "a plurality of" means two or more. The term and/or describes an association relationship for describing associated objects and represents that three relationships may exist. For example, A and/or B may represent the following cases: Only A exists, both A and B exist, and only B exists, where A and B may be singular or plural. The character "/" usually indicates an "or" relationship between associated objects. At least one of the following items (pieces) or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, a first data packet and a second data packet are merely names given for ease of description, and the two data packets may be a same data packet, or may be different data packets.

The following describes technical features in embodiments of this application.

In wired transmission, line coding schemes, such as 8B/10B, are usually used to encode data and control information. The 8B/10B can ensure that a quantity of 0s is the same as that of 1s in a bit stream, to maintain direct current balance and improve transmission quality of signals on cables. However, overheads are high, and reach 20%.

With an increase in a wired transmission rate, it is difficult to increase working frequency of a wired channel. Low-overhead line coding, such as 64B/66B+scrambling code and 64B/65B+scrambling code, gradually replaces the 8B/10B and becomes a mainstream line coding scheme. Scrambling code is used for direct current balance, and 64B/66B and 64B/65B are mainly used to distinguish data and control. In comparison with the 8B/10B, the 64B/66B and the 64B/65B may reduce overheads to 1.5% to 3%.

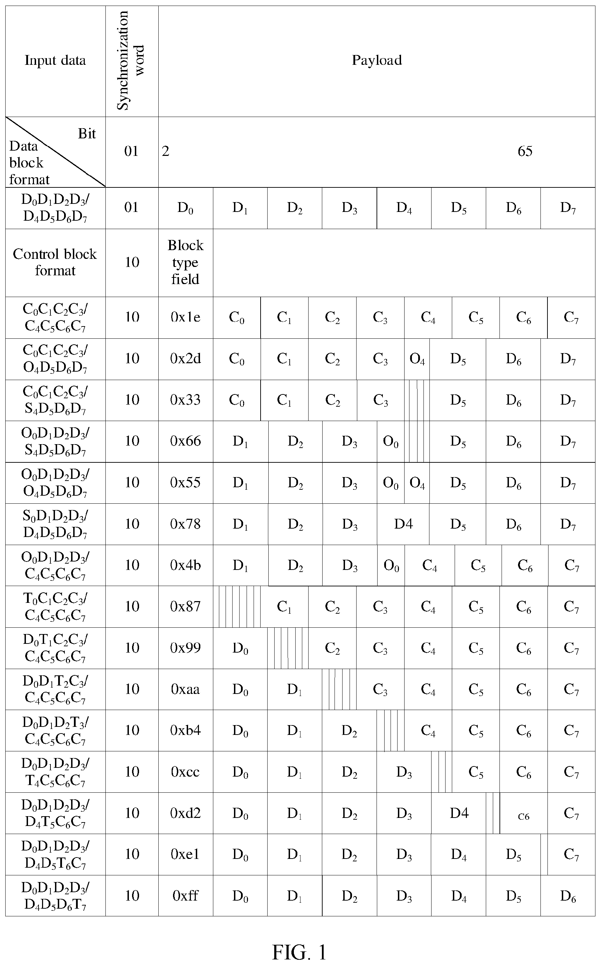

A 64B/66B line code block is similar to a 64B/65B line code block. A difference lies in that each 64B/66B line code block includes a 2-bit synchronization word and a 64-bit payload. When the synchronization word is 01, the 64-bit payload is data information, for example, media access control (media access control, MAC) data. When the synchronization word is 10, the 64-bit payload includes control information. Two other states of the synchronization word 00 and 11 are not used. If the synchronization word of the code block is 10, that is, when the 64-bit payload of the code block includes the control information, the first eight bits of the 64-bit payload of the code block are a block type field. The 64B/66B line code block may be shown in FIG. 1.

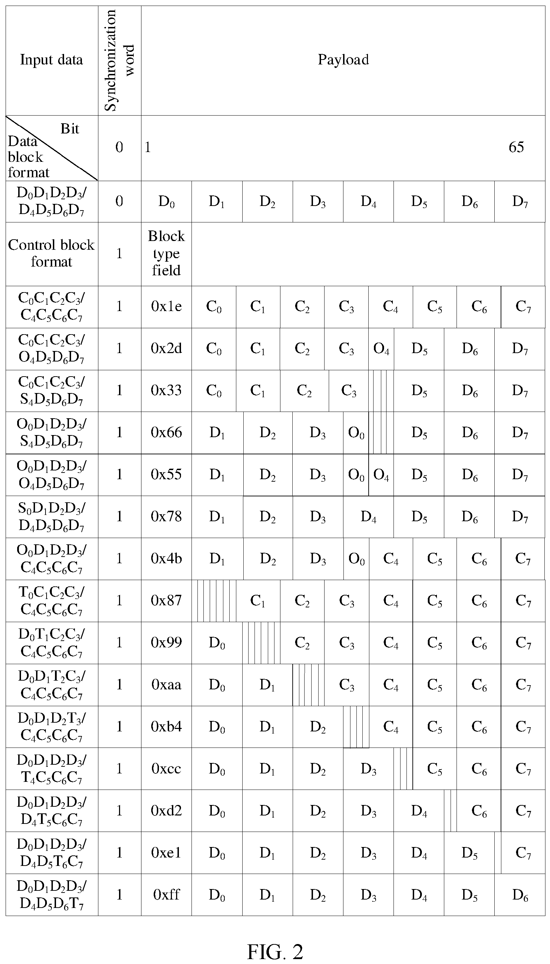

Each 64B/65B line code block includes a 1-bit synchronization word and a 64-bit payload. When the synchronization word is 0, the 64-bit payload is data information, for example, MAC data. When the synchronization word is 1, the 64-bit payload includes control information. If the synchronization word of the code block is 1, that is, when the 64-bit payload of the code block includes the control information, the first eight bits of the 64-bit payload of the code block are a block type field. The 64B/65B line coding may be shown in FIG. 2.

In the 64B/66B line code block shown in FIG. 1 and the 64B/65B line code block shown in FIG. 2, C indicates the control information, D indicates the data information, O indicates a sequence, S indicates a start of a data frame, and T indicates an end of the data frame.

A mapping relationship between a block type field and a payload format in the 64B/66B line code block is the same as a mapping relationship between a block type field and a payload format in the 64B/65B line code block.

The following uses the 64B/66B line code block as an example to describe the block type field.

When the block type field is 0x1e, the following 56 bits are eight 7-bit sub-blocks, and each 7-bit sub-block carries one piece of control information, for example, padding (Padding).

When the block type field is 0x2d, it indicates that an O₄D₅D₆D₇ location indicates that a sending node has a receiving exception.

When the block type field is 0x33, it indicates that D₅D₆D₇ is data, and D₅ is the first segment of the data frame. 0x78 indicates that D₁ to D₇ are data and D₁ is the start of the data frame.

When the block type field is 0x87, 0x99, or 0xff, this field indicates the last segment of the data frame, and indicates an end location of the last segment of the data frame based on a type.

It should be understood that a value of the block type field may alternatively be another value that is not shown in FIG. 1. Details are not described one by one herein.

A receiving node determines, by using the value of the block type field, a code block whose payload carries S (used to indicate the first segment of the data frame), a code block whose payload is the data information, and a code block whose payload carries T (used to indicate the last segment of the data frame), and sequentially extracts the data information carried in the spliced code blocks, to obtain a complete data frame. For example, the sending node sequentially sends code blocks 1 to 7 to the receiving node, where a synchronization word of a code block 1 is 10 and a value of a block type field is 0x78, synchronization words of code blocks 2 to 6 are 01, and a synchronization word of a code block 7 is 10 and a value of a block type field is 0xe1. The receiving node determines, based on the synchronization word and the value of the block type field, that D₁ carried in a payload of the code block 1 is the first segment of the data frame, payloads of the code blocks 2 to 6 each carry one segment of the data frame, and D₅ carried in a payload of the code block 7 is the last segment of the data frame. The receiving node may sequentially splice D₁ to D₇ carried in the payload of the code block 1, D₀ to D₇ carried in the payload of the code block 2, D₀ to D₇ carried in the payload of the code block 3, D₀ to D₇ carried in the payload of the code block 4, ..., D₀ to D₇ carried in the payload of the code block 6, and D₀ to D₅ carried in the payload of the code block 7 to obtain the data frame.

In 64B/66B line coding and 64B/65B line coding, start and end indications of the data frame depend on further parsing of the block type field. Because the synchronization word indicates that the 64-bit payload of the code block includes the control information, the payload format of the code block has a plurality of states, and processing complexity is high. As a result, a delay of wired transmission is long. If the block type field is incorrect, a start location of the data frame may be lost.

Based on this, embodiments of this application provide a line coding method and an apparatus, to resolve a problem that processing complexity of data frames is high with a long delay and low accuracy in the foregoing line coding scheme. The method and apparatus are based on a same inventive concept. Because the method and the device have a similar problem-resolving principle, for implementations of the apparatus and the method, refer to each other, and no repeated description is provided. Embodiments of this application provide a line coding method and an apparatus, which may be applied to an intra-vehicle network, especially an intra-vehicle network of self-driving vehicles, or may be applied to another wired transmission device.

The following describes in detail embodiments of this application with reference to the accompanying drawings.

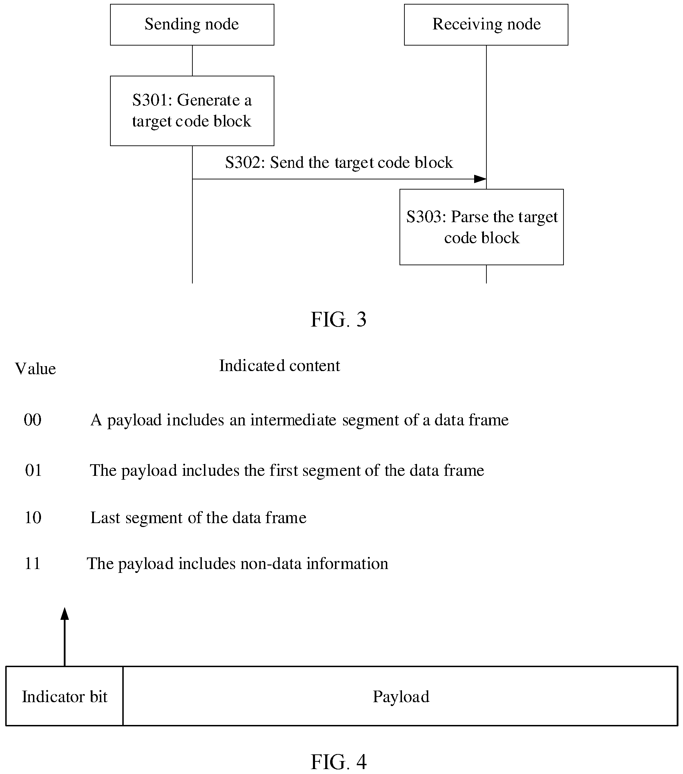

This application provides a line coding method, and the method may be applied to a wired transmission system. As shown in FIG. 3, the method includes the following steps.

S301: A sending node generates a target code block, where the target code block includes an indicator bit and a payload, and the indicator bit includes a first value, a second value, a third value, and a fourth value.

The first value is used to indicate that the payload includes the first segment of a data frame. That is, when the indicator bit is the first value, it may indicate that data carried in the code block is a start part of the data frame.

In embodiments of this application, the data frame generally refers to a packet in a specific frame format, for example, an Ethernet MAC frame or an IP frame. A specific type of the data frame is not limited in embodiments of this application.

The second value is used to indicate that the payload includes an intermediate segment of the data frame. That is, when the indicator bit is the second value, it may indicate that data carried in the code block is an intermediate part of the data frame.

The third value indicates that the payload includes the last segment of the data frame. That is, when the indicator bit is the third value, it may indicate that data carried in the code block is an end part of the data frame.

The fourth value is used to indicate that the payload includes non-data information. That is, when the indicator bit is the fourth value, it may indicate that the code block carries the non-data information, for example, a physical layer padding bit, a sub-indicator bit, and control information.

In a possible implementation, the indicator bit may include two bits, and four values of the two bits respectively indicate that the payload includes the first segment of the data frame, the payload includes the intermediate segment of the data frame, the payload includes the last segment of the data frame, and the payload includes the non-data information. For example, as shown in FIG. 4, when the indicator bit is 00, it indicates that the payload includes the intermediate segment of the data frame. When the indicator bit is 01, it indicates that the payload includes the first segment of the data frame. When the indicator bit is 10, it indicates the last segment of the data frame. When the indicator bit is 11, it indicates that the payload includes the non-data information.

It should be understood that a 2-bit indicator bit is merely used as an example for description herein. During specific implementation, a quantity of bits included in the indicator bit may alternatively be another quantity, for example, 3 bits or 4 bits. This is not specifically limited herein. If the quantity of bits included in the indicator bit is greater than 2, another value of the indicator bit may also be used to indicate other content, or may be reserved. This is not specifically limited herein.

In embodiments of this application, a quantity of bits included in the payload may be Y, and Y is an integer greater than 0. For example, Y may be 64.

In embodiments of this application, the first segment (namely, a start of the data frame), the last segment (namely, an end of the data frame), and the intermediate segment (namely, a continuation of the data frame) of the data frame are directly indicated by the indicator bit, and data/control is indicated by a synchronization word. In comparison with a manner in which a block type field is used to indicate a payload format, a start location and an end location of the data frame are decoupled from the block type field, and are directly indicated by the indicator bit. This can simplify data processing complexity, to reduce complexity and a delay of wired transmission.

For ease of description, in the following, a code block whose payload includes data information is referred to as a data code block, that is, a code block whose indicator bit value is the first value, the second value, or the third value is referred to as a data code block; and a code block whose payload includes the non-data information is referred to as a control code block, that is, a code block whose indicator bit value is the fourth value is referred to as a control code block.

The following describes the target code block by using an example in which the target code block is the data code block, that is, the payload of the target code block includes the data information, in other words, the indicator bit value of the target code block is the first value, the second value, or the third value.

In an implementation, when generating the target code block, the sending node may divide the data frame into N segments, where N is an integer greater than 1, and encode the N segments to obtain N data code blocks. One data code block may carry one segment of the data frame. The N data code blocks include the target code block, and if the payload of the target code block includes the first segment in the N segments, the indicator bit of the target code block is the first value; if the payload of the target code block includes an n^{th} segment in the N segments, the indicator bit of the target code block is the second value, and n is an integer greater than 1 and less than N; or if the payload of the target code block includes an N^{th} segment in the N segments, the indicator bit of the target code block is the third value.

For example, when the data frame is segmented, the data frame may be divided into equal-length segments, that is, the data frame is divided into N equal-length segments. For example, the data frame may be divided into N Y bit segments, where Y bits are a length of the payload.

For ease of understanding of the solution, with reference to a code block structure shown in FIG. 4, the following uses an example in which the indicator bit includes 2 bits and the payload includes 64 bits to describe an encoding process of the data frame.

A1: The sending node divides a first data frame into N 64-bit segments.

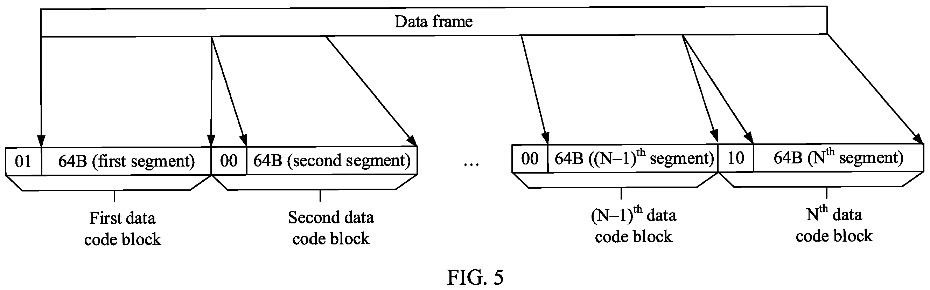

A2: The sending node encodes the N segments to obtain N data code blocks, where an indicator bit value of the first data code block is 01, and a payload carries the first segment of the first data frame; indicator bit values of the second data code block to an (N-1)^{th} data code block are 00, and payloads of the second data code block to the (N-1)^{th} data code block respectively carry the second segment to an (N-1)^{th} segment of the first data frame; and an indicator bit value of an N^{th} data code block is 10, and a payload carries an N^{th} segment of the first data frame, as shown in FIG. 5.

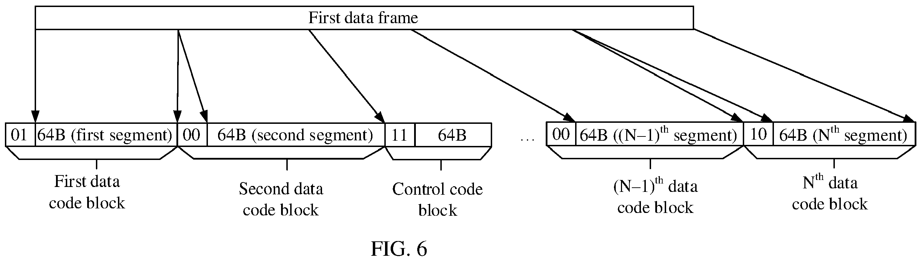

It should be noted that the N data code blocks may be consecutively sent, or may be inconsecutively sent. To be specific, a control code block may be interleaved between any two of the N code blocks for sending. For example, as shown in FIG. 6, the control code block may be sent between the second data code block and the third data code block. A payload (64B) of the control code block may carry a physical layer padding bit, or may carry control information, or may carry a second data frame. The second data frame is a complete (unsegmented) data frame. Optionally, the second data frame and the first data frame may be from different interfaces. For example, the first data frame is from a MAC layer interface, and the second data frame is from an IP layer interface.

It should be understood that FIG. 6 is merely an example for description, and does not specifically limit a quantity of control code blocks and sending locations of the control code blocks that are sent in an interleaved manner in the data code block.

The following describes the target code block by using an example in which the target code block is the control code block, that is, the payload of the target code block includes the non-data information, in other words, the indicator bit value of the target code block is the fourth value.

In an example description, if a bit carried in the payload of the target code block is the physical layer padding bit, the indicator bit may be the fourth value.

In another example description, if the indicator bit is the fourth value, or if the payload carries the non-data information such as the physical layer padding bit, the control information, or the data frame, the payload of the target code block includes the sub-indicator bit. For example, the first X bits of the payload of the target code block are the sub-indicator bit. For example, the first eight bits of the payload are the sub-indicator bit.

The sub-indicator bit may separately indicate, by using different values, that the payload carries the physical layer padding bit, the payload carries the control information, and the payload carries the data frame.

If the payload carries the physical layer padding bit, the sub-indicator bit may indicate that the payload carries the physical layer padding bit. The physical layer padding bit carried by the payload may be used to match a rate, and a receiving node may discard the physical layer padding bit after receiving the physical layer padding bit.

If the payload carries the control information, the sub-indicator bit may indicate that the payload carries the control information.

Optionally, the sub-indicator bit may further indicate a type of the control information carried in the payload. For example, the type of the control information may include at least one of the following: block identification information, transmission acknowledgment information, intermittent test information, sleep information, and link retraining information. Different types may be indicated by using different values of the sub-indicator bit.

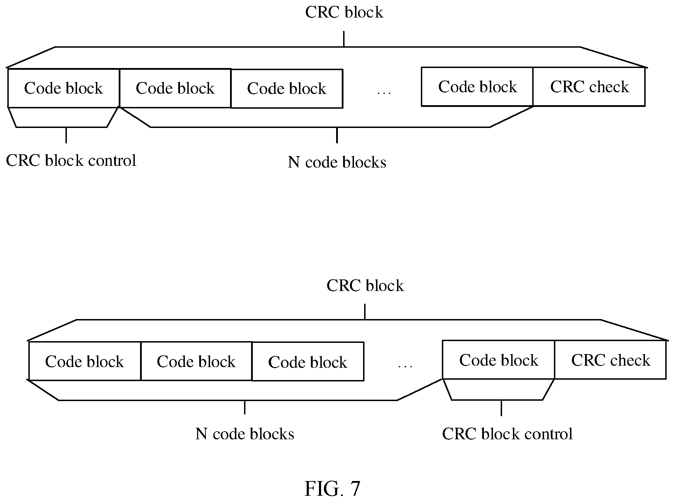

The block identification information may be control information of a cyclic redundancy check (cyclic redundancy check, CRC) block (such as a CRC block number and whether retransmission is supported). The CRC block may include the block identification information, a plurality of code blocks, and CRC check. The CRC block may use one code block to carry the control information of the CRC block. For example, the control information of the CRC block may be carried in a payload of the first code block or the last code block of the CRC block, for example, as shown in FIG. 7.

The transmission acknowledgment information may be used to indicate whether the CRC block is correctly received.

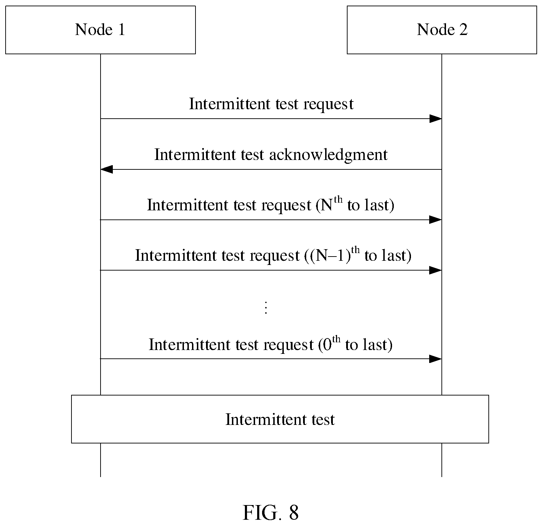

The intermittent test information is used to control a device to enter or exit an online test mode. Through an online test, the device may temporarily suspend data transmission, send an agreed sequence, and perform an interference detection test, a bit error rate (bit error ratio, BER) test, a block error rate (block error ratio, BLER) test, and the like. After exiting the online test, the device may quickly resume data transmission. The intermittent test information may include the following information: a type of the intermittent test information, for example, intermittent test request information, intermittent test response information, intermittent test start information, and intermittent test end information; intermittent test start time, for example, a quantity of code blocks or CRC blocks after which an intermittent test is started, where the intermittent test start time may be carried in the intermittent test information of an intermittent test start type; duration of the intermittent test, where the duration may be fixed duration, or may be indicated in a request message; and exiting of the online test, for example, exiting when time arrives, or exiting when the intermittent test ends. For example, an intermittent test process may be shown in FIG. 8.

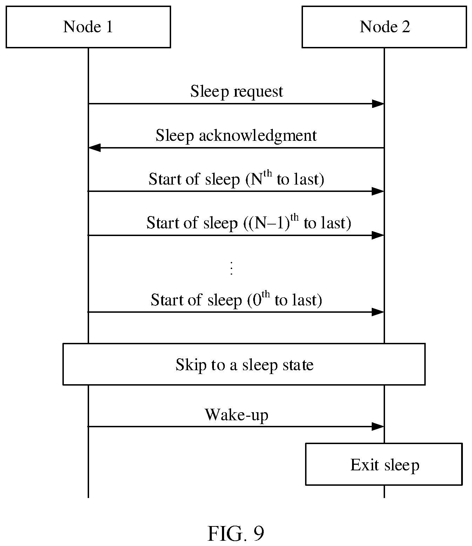

The sleep information is used to control whether to enter or exit a low power consumption mode. When data transmission is not required, the device can enter the low power consumption mode to reduce power consumption. When transmission is required again, the device may exit the low power consumption mode by using wake-up information. The sleep information may include: a type of sleep information, for example, a sleep request, a sleep response, a sleep start, or wakeup; and time for entering the low power consumption mode, for example, a quantity of code blocks or CRC blocks after which the low power consumption mode is entered, where the time for entering the low power consumption mode may be carried in the sleep information of a sleep start type. For example, a sleep process may be shown in FIG. 9.

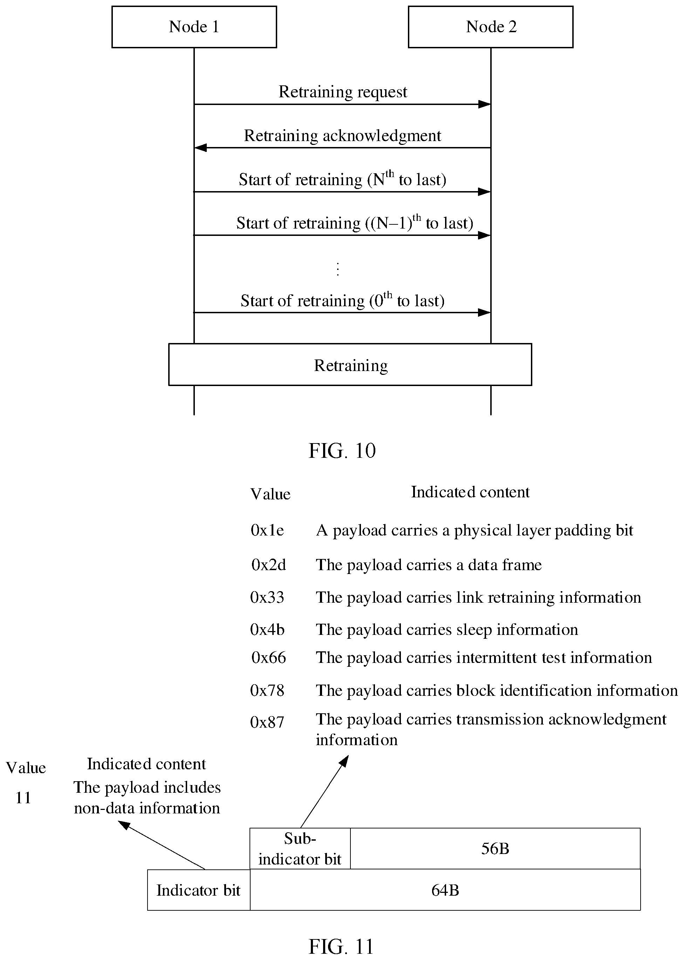

The link retraining information is used to control entering link retraining. Link quality deteriorates because a transport channel changes with an environment state like time and temperature. Through retraining, the device may obtain better transmission quality. The link retraining information may include a type of the link retraining information, for example, a retraining request, a retraining response, or a retraining start; and retraining start time, for example, a quantity of code blocks or a quantity of CRC blocks after which link retraining is started. For example, a link retraining process may be shown in FIG. 10.

If the sub-indicator bit indicates that the payload carries the data frame, the payload may carry a complete data frame, namely, a data frame without a segment. It should be understood that a quantity of bits of the data frame is not greater than a quantity of bits included in the payload.

For ease of understanding of the solution, with reference to the code block structure shown in FIG. 4, the following uses an example in which the indicator bit includes 2 bits and the payload includes 64 bits. It is assumed that the sub-indicator bit is the first eight bits of the payload, and seven values of the eight bits may be used to respectively indicate that: the payload carries the physical layer padding bit, the payload carries the data frame, the payload carries the link retraining information, the payload carries the sleep information, the payload carries the intermittent test information, the payload carries the block identification information, and the payload carries the transmission acknowledgment information. For example, as shown in FIG. 11, if the sub-indicator bit is 0x1e, it indicates that the payload carries the physical layer padding bit; if the sub-indicator bit is 0x2d, it indicates that the payload carries the data frame; if the sub-indicator bit is 0x33, it indicates that the payload carries the link retraining information; if the sub-indicator bit is 0x4b, it indicates that the payload carries the sleep information; if the sub-indicator bit is 0x66, it indicates that the payload carries the intermittent test information; if the sub-indicator bit is 0x78, it indicates that the payload carries the block identification information; or if the sub-indicator bit is 0x87, it indicates that the payload carries the transmission acknowledgment information.

It should be understood that an 8-bit sub-indicator bit is merely used as an example for description herein. During specific implementation, a quantity of bits included in the sub-indicator bit may alternatively be another quantity, for example, 7 bits or 9 bits. This is not specifically limited herein. If a state value of the sub-indicator bit is greater than 7, another state value of the indicator bit may also be used to indicate other content, or may be reserved. This is not specifically limited herein.

It should be understood that content indicated by the sub-indicator bit in embodiments of this application is merely an example for description. During specific implementation, the content indicated by the sub-indicator bit may include all or a part of the foregoing content. In addition, the sub-indicator bit may further indicate other content. Details are not listed one by one herein.

In embodiments of this application, the payload may carry a plurality of types of control information, a complete data frame with a small data amount, padding, and the like, and content carried in the payload may be further indicated by the sub-indicator bit, so that the code block can support complex control information, and indication flexibility can be improved. In addition, in embodiments of this application, the payload supports carrying the complete data frame with the small data amount, so that transmission overheads of the data frame with the small data amount are reduced, insertion of the complete data frame with the small data amount between segments of the data frame is enabled, and a transmission delay of the complete data frame with the small data amount is reduced.

In some embodiments, if the payload carries the control information, that is, the indicator bit is the fourth value, the payload may further include a CRC field, and the CRC field may be used to perform check protection on the control information. For example, the CRC field may be 8 bits or 16 bits.

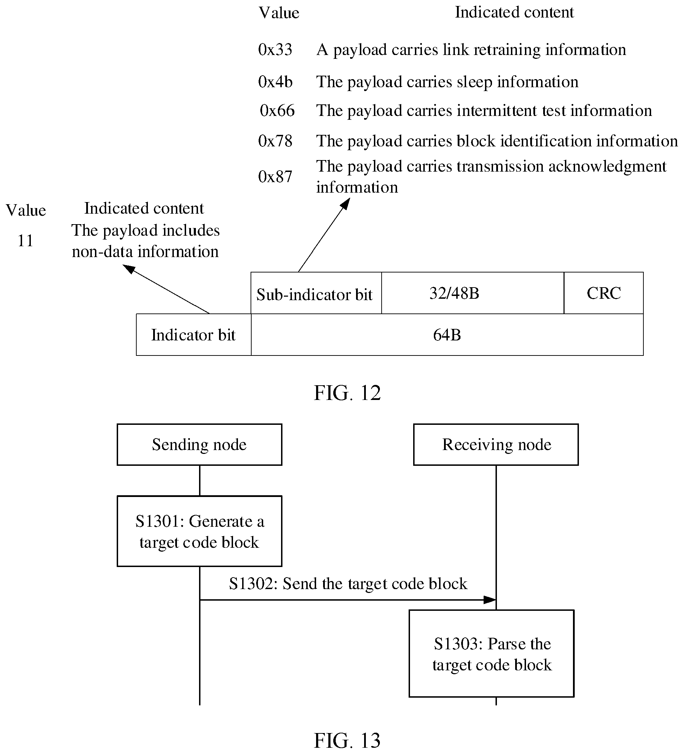

For example, in the code block structure shown in FIG. 4, an example in which the indicator bit includes 2 bits and the payload includes 64 bits is used. Assuming that the sub-indicator bit is the first 8 bits of the payload, the CRC field may be the last 8 bits or 16 bits of the payload, as shown in FIG. 12.

In the foregoing design, reliability of the control information can be ensured by using the CRC field, so that error control can be avoided.

S302: The sending node sends the target code block. Correspondingly, the receiving node receives the target code block.

S303: The receiving node parses the target code block.

In an implementation, the receiving node may determine, based on the indicator bit value of the target code block, content carried in the payload. For details about the indicator bit of the target code block and the payload of the target code block, refer to related descriptions of the foregoing target code block. Details are not described herein again.

In an example, if the payload carries one segment of the data frame, the receiving node may determine, based on the indicator bit value, a location of the segment carried in the payload in the data frame. For example, when the indicator bit is the first value, the segment carried in the payload is the first segment of the data frame, namely, a start of the data frame. When the indicator bit is the second value, the segment carried in the payload is the intermediate segment of the data frame, namely, a continuation of the data frame. When the indicator bit is the third value, the segment carried in the payload is the last segment of the data frame, namely, an end of the data frame. The receiving node may splice received segments based on locations of the segments carried in the payload in the data frame, to obtain a complete data frame.

In embodiments of this application, the first segment (namely, the start of the data frame), the last segment (namely, the end of the data frame), and the intermediate segment (namely, the continuation of the data frame) of the data frame are directly indicated by the indicator bit, and data/control is indicated by a synchronization word. In comparison with a manner in which a block type field is used to indicate a payload format, a start location and an end location of the data frame are decoupled from the block type field, and are directly indicated by the indicator bit. This can simplify data processing complexity, to reduce complexity and a delay of wired transmission.

Further, if the indicator bit is the fourth value, the payload may carry the plurality of types of control information, the complete data frame with the small data amount, the padding, and the like, so that the code block can support complex control information, and indication flexibility can be improved. In addition, in embodiments of this application, the payload supports carrying the complete data frame with the small data amount, so that transmission overheads of the data frame with the small data amount are reduced, insertion of the complete data frame with the small data amount between segments of the data frame is enabled, and a transmission delay of the complete data frame with the small data amount is reduced.

In addition, when the payload carries the control information, reliability of the control information can be ensured by including the CRC field in the payload, so that error control can be avoided.

This application provides another line coding method, and the method may be applied to a wired transmission system. As shown in FIG. 13, the method includes the following steps.

S1301: A sending node generates a target code block, where the target code block includes an indicator bit and a payload, the indicator bit includes a first value and a second value, the first value is used to indicate that the payload includes one segment of a first data frame, and the second value is used to indicate that the payload includes non-data information.

In embodiments of this application, the data frame generally refers to a packet in a specific frame format, for example, an Ethernet MAC frame or an IP frame. A specific type of the data frame is not limited in embodiments of this application.

In a possible implementation, the indicator bit may include 1 bit, and two values of the 1 bit respectively indicate that the payload includes the segment of the first data frame and that the payload includes the non-data information. For example, when the indicator bit is 0, it indicates that the payload includes the segment of the first data frame. When the indicator bit is 1, it indicates that the payload includes the non-data information.

It should be understood that a 1-bit indicator bit is merely used as an example for description herein. During specific implementation, a quantity of bits included in the indicator bit may alternatively be another quantity, for example, 2 bits or 5 bits. This is not specifically limited herein. If the quantity of bits included in the indicator bit is greater than 1, another value of the indicator bit may also be used to indicate other content, or may be reserved. This is not specifically limited herein.

In embodiments of this application, a quantity of bits included in the payload may be Y, and Y is an integer greater than 0. For example, Y may be 64.

If the indicator bit is the second value, the payload includes a sub-indicator bit, and the sub-indicator bit is used to indicate at least one of the following information: a next code block of the target code block carries the first segment of the first data frame, a previous code block of the target code block carries the last segment of the first data frame, a bit carried in the payload of the target code block is a physical layer padding bit, the payload of the target code block carries control information, the payload of the target code block carries the first data frame, and the first data frame and at least one second data frame are spliced.

In embodiments of this application, the sub-indicator bit is used to indicate a start or an end of the data frame, so that overheads of the indicator bit can be reduced. In addition, a code block indicating the start of the data frame and a code block indicating the end of the data frame are respectively inserted before the first segment and after the last segment of the data frame. In comparison with a manner in which a block type field indicates a payload format, the sub-indicator bit directly indicates the start or the end of the data frame. This can simplify data processing complexity, to reduce a delay of wired transmission.

For example, if the next code block of the target code block carries the first segment of the first data frame, the bit carried in the payload of the target code block is the physical layer padding bit, and the sub-indicator bit indicates that the next code block of the target code block carries the first segment of the first data frame.

Alternatively, if the previous code block of the target code block carries the last segment of the first data frame, the sub-indicator bit indicates that the previous code block of the target code block carries the last segment of the first data frame, and the bit carried in the payload of the target code block is the physical layer padding bit.

Alternatively, if the bit carried in the payload of the target code block is the physical layer padding bit, the sub-indicator bit indicates that the bit carried in the payload of the target code block is the physical layer padding bit.

Alternatively, if the payload of the target code block carries the control information, and the sub-indicator bit indicates that the payload carries the control information, the sub-indicator bit may further indicate a type of the control information. For details of the control information, refer to related descriptions of the control information in step S301. Details are not described herein again.

Alternatively, if the payload of the target code block carries the first data frame, the sub-indicator bit indicates that the payload of the target code block carries the first data frame.

Alternatively, if the payload of the target code block carries all or a part of data of the first data frame and all or a part of data of the at least one second data frame, the sub-indicator bit indicates that the first data frame and the at least one second data frame are spliced. In an example, the sub-indicator bit indicates that the first data frame and the at least one second data frame are spliced, and may specifically indicate a boundary location of the first data frame and the at least one second data frame in the payload. Locations of the first data frame and the at least one second data frame in the payload may refer to a boundary of the first data frame, namely, an end location of the first data frame, and a boundary of the at least one second data frame, namely, a start location and an end location of the at least one second data frame.

An example in which the first data frame and one second data frame are spliced is used to describe the payload of the target code block.

Example 1: The payload of the target code block includes the first segment of the second data frame and the first data frame, where the first segment is after the first data frame. The first data frame is a complete data frame, namely, a data frame without a segment.

Example 2: The payload of the target code block includes the first segment of the second data frame and the last segment of the first data frame, where the first segment is after the last segment.

Example 3: The payload of the target code block includes the last segment of the first data frame and the second data frame, where the second data frame is after the last segment. The second data frame is a complete data frame, namely, a data frame without a segment.

Example 4: The payload of the target code block includes the first data frame and the second data frame, where the second data frame is after the first data frame. The first data frame and the second data frame are complete data frames, namely, data frames without segments.

In a possible implementation, there is an interframe space between two adjacent data frames in the first data frame and the at least one second data frame. The interframe space may have an interframe buffering function. For example, the interframe space may be 8-bit padding, and the receiving node may directly discard the interframe space.

For ease of understanding of the solution, an example in which the indicator bit includes 1 bit and the payload includes 64 bits is used. Assuming that the sub-indicator bit is the first 8 bits of the payload, nine values of the 8 bits may be used to respectively indicate that: the next code block of the target code block carries the first segment of the first data frame, the previous code block of the target code block carries the last segment of the first data frame, the bit carried in the payload of the target code block is the physical layer padding bit, the payload of the target code block carries the first data frame, the payload of the target code block carries link retraining information, the payload of the target code block carries sleep information, the payload of the target code block carries intermittent test information, the payload of the target code block carries block identification information, and the payload of the target code block carries transmission acknowledgment information. Other six values of the 8 bits are used to indicate splicing of the first data frame and the at least one second data frame, and different splicing locations of the first data frame and the at least one second data frame in the payload.

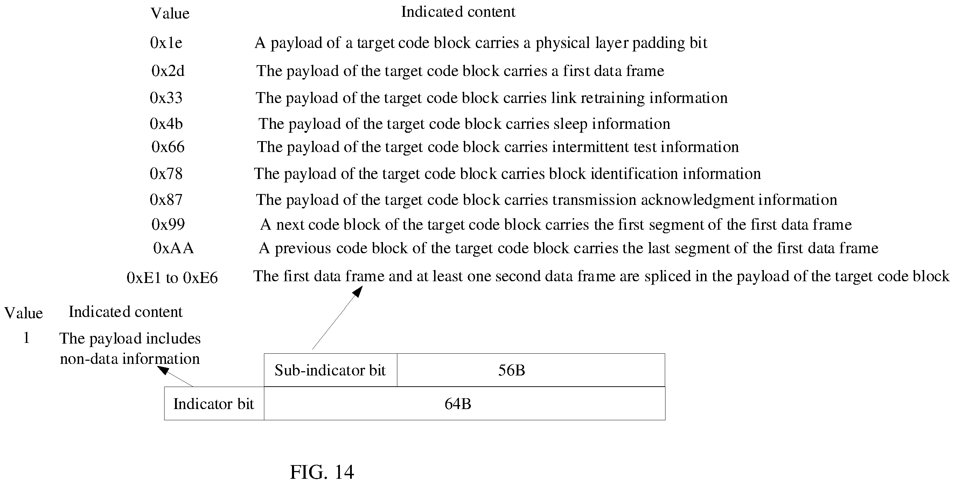

For example, as shown in FIG. 14, if the sub-indicator bit is 0x1e, it indicates that the payload of the target code block carries the physical layer padding bit; if the sub-indicator bit is 0x2d, it indicates that the payload of the target code block carries the first data frame; if the sub-indicator bit is 0x33, it indicates that the payload of the target code block carries the link retraining information; if the sub-indicator bit is 0x4b, it indicates that the payload of the target code block carries the sleep information; if the sub-indicator bit is 0x66, it indicates that the payload of the target code block carries the intermittent test information; if the sub-indicator bit is 0x78, it indicates that the payload of the target code block carries the block identification information; if the sub-indicator bit is 0x87, it indicates that the payload of the target code block carries the transmission acknowledgment information; if the sub-indicator bit is 0x99, it indicates that the next code block of the target code block carries the first segment of the first data frame; if the sub-indicator bit is 0xAA, it indicates that the previous code block of the target code block carries the last segment of the first data frame; or if the sub-indicator bits is 0xE1 to 0xE6, it indicates that the first data frame and the at least one second data frame are spliced, and locations of the first data frame and the at least one second data frame in the payload are respectively 1 byte, 2 bytes, 3 bytes, 4 bytes, 5 bytes, and 6 bytes of the payload, that is, the last segments of the first data frame is respectively 1 to 6 bytes.

It should be noted that an 8-bit sub-indicator bit is used as an example for description herein. During specific implementation, a quantity of bits included in the sub-indicator bit may alternatively be another quantity, for example, 7 bits or 9 bits. This is not specifically limited herein. If a state value of the sub-indicator bit is greater than 10, another state value of the indicator bit may also be used to indicate other content, or may be reserved. This is not specifically limited herein.

It should be understood that content indicated by the sub-indicator bit in embodiments of this application is merely an example for description. During specific implementation, the content indicated by the sub-indicator bit may include all or a part of the foregoing content. In addition, the sub-indicator bit may further indicate other content. Details are not listed one by one herein.

For ease of description, in the following, a code block whose payload includes data information is referred to as a data code block, that is, a code block whose indicator bit value is the first value is referred to as a data code block; and a code block whose payload includes the non-data information is referred to as a control code block, that is, a code block whose indicator bit value is the second value is referred to as a control code block.

In an implementation, when generating the target code block, the sending node may divide the first data frame into N segments, where N is an integer greater than 1; and encode the N data blocks to obtain N+2 code blocks, where the N+2 code blocks include the target code block, and if the target code block is the first code block in the N+2 code blocks, the indicator bit of the target code block is the second value, and the sub-indicator bit is used to indicate that the next code block of the target code block carries the first segment of the first data frame; if the target code block is an n^{th} code block in N+2 code blocks, the indicator bit of the target code block is the first value, and n is an integer greater than 1 and less than N+2; or if the target code block is an (N+2)^{th} code block in the N+2 code blocks, the indicator bit of the target code block is the second value, and the sub-indicator bit is used to indicate that the previous code block of the target code block carries the last segment of the first data frame.

For example, when the data frame is segmented, the data frame may be divided into equal-length segments, that is, the data frame is divided into N equal-length segments. For example, the data frame may be divided into N Y-bit segments, where Y bits are a length of the payload.

For ease of understanding of the solution, with reference to a code block structure shown in FIG. 14, assuming that the payload includes 64 bits, the following uses an example to describe an encoding process of the data frame.

B1: The sending node divides a data frame 1 into N 64-bit segments.

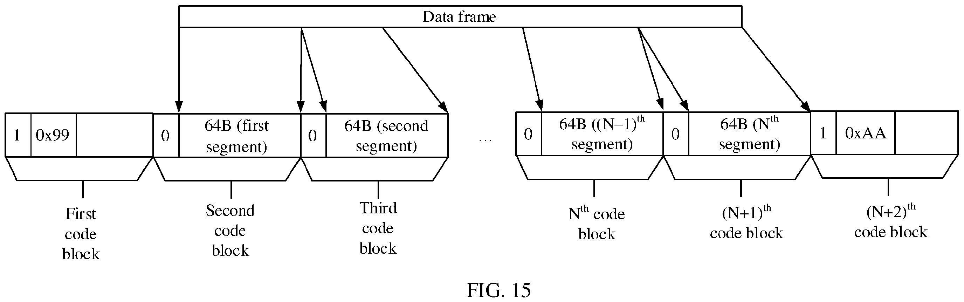

B2: The sending node encodes the N segments to obtain N+2 code blocks, where an indicator bit value of the first code block is 1, a value of a sub-indicator bit is 0x99, and a payload carries a physical layer padding bit; indicator bit values of the second data code block to an (N-1)^{th} data code block are 0, and payloads of the second data code block to an (N+1)^{th} data code block respectively carry the first segment to an N^{th} segment of the data frame 1; and an indicator bit value of an (N+2)^{th} data code block is 1, a value of a sub-indicator bit is 0xAA, and a payload carries a physical layer padding bit, as shown in FIG. 15.

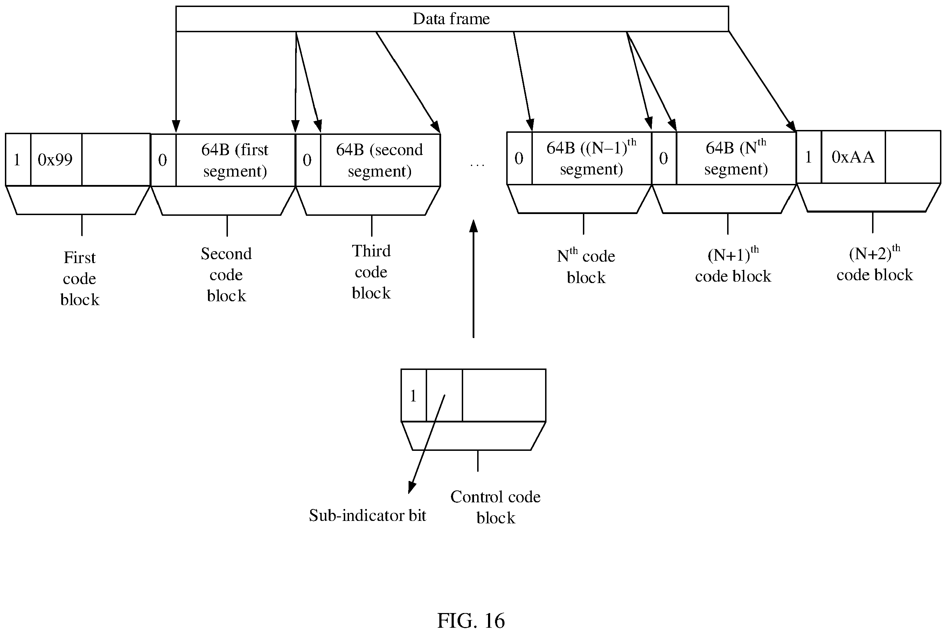

It should be noted that the N+2 code blocks may be consecutively sent, or may be inconsecutively sent. To be specific, a control code block may be interleaved between any two of the N+2 code blocks for sending, as shown in FIG. 16. A payload of the control code block may carry a physical layer padding bit, or may carry control information, or may carry a second data frame. The second data frame is a complete (unsegmented) data frame. Optionally, the second data frame and the first data frame may be from different interfaces. For example, the first data frame is from a MAC layer interface, and the second data frame is from an IP layer interface.

It should be understood that FIG. 16 is merely an example for description, and does not specifically limit a quantity of other code blocks that carry the control information and sending locations of the other code blocks.

In the foregoing design, one code block is inserted before the first segment and one code block is inserted after the last segment of the data frame to indicate a start and an end of the data frame, so that the receiving node may simply and directly determine the start and the end of the data frame. In comparison with a manner in which a synchronization field is used to indicate data/control and then a block type field is used to indicate a payload format, this simplifies data processing complexity, to reduce complexity and a delay of wired transmission.

For example, if the sub-indicator bit indicates that the payload of the target code block carries the control information, that is, the payload carries the control information, the payload may include a CRC field, and the CRC field is used to perform check protection on the control information.

If the sub-indicator bit indicates that the next code block of the target code block carries the first segment of the first data frame, or the sub-indicator bit indicates that the previous code block of the target code block carries the last segment of the first data frame, or the sub-indicator bit indicates that the payload of the target code block carries the physical layer padding bit, the payload may also include a CRC field.

For example, the CRC field may be 8 bits or 16 bits.

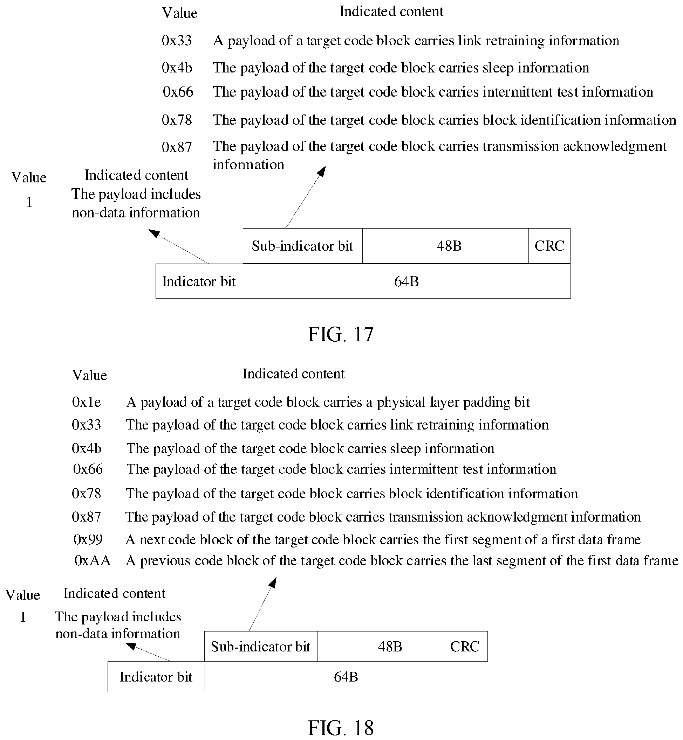

For example, in the code block structure shown in FIG. 14, assuming that the payload includes 64 bits, and the sub-indicator bit is the first 8 bits of the payload, the CRC field may be the last 8 bits or 16 bits of the payload, as shown in FIG. 17 or FIG. 18.

In the foregoing design, reliability of the control information can be ensured by using the CRC field, so that error control can be avoided.

S1302: The sending node sends the target code block. Correspondingly, the receiving node receives the target code block.

S 1303: The receiving node parses the target code block.

In an implementation, the receiving node may determine, based on the indicator bit value of the target code block and the value of the indicator sub-bit, content carried in the payload. For details about the indicator bit, the payload, and the sub-indicator bit of the target code block, refer to related descriptions of the target code block in S1301. Details are not described herein again.

In an example, if the payload of the first code block carries one segment of the data frame, the receiving node may determine, based on indicator bit values and values of sub-indicator bits of the second code block before the first code block and the third code block after the first code block, a location of the segment carried in the payload of the first code block in the data frame. For example, if the indicator bit of the second code block is the second value, and the sub-indicator bit indicates that a next code block of the code block carries the first segment of the data frame, the segment carried in the payload of the first code block is the first segment of the data frame, namely, the start of the data frame. If the indicator bit of the third code block is the second value, and the sub-indicator bit indicates that a previous code block of the code block carries the last segment of the data frame, the segment carried in the payload of the first code block is the last segment of the data frame, namely, the end of the data frame. If the indicator bits of the second code block and the third code block are both the first value, the segment carried in the payload of the first code block is the intermediate segment of the data frame, namely, the continuation of the data frame. The receiving node may splice received segments based on the location of the segment carried in the payload of the first code block in the data frame, to obtain the complete data frame.

In embodiments of this application, the sub-indicator bit is used to indicate a start or an end of the data frame, so that overheads of the indicator bit can be reduced. In addition, a code block indicating the start of the data frame and a code block indicating the end of the data frame are respectively inserted before the first segment and after the last segment of the data frame. In comparison with a manner in which a block type field indicates a payload format, the sub-indicator bit directly indicates the start or the end of the data frame. This can simplify data processing complexity, to reduce a delay of wired transmission.

In addition, if the indicator bit is the second value, the payload may carry a plurality of types of control information, a complete data frame with a small data amount, padding, and the like, so that the code block can support complex control information, and indication flexibility can be improved. In addition, in embodiments of this application, the payload supports carrying the complete data frame with the small data volume, so that transmission overheads of the data frame with the small data amount are reduced. In addition, in embodiments of this application, the payload supports splicing of two or more data frames, so that data transmission flexibility can be improved.

In addition, reliability of the control information can be ensured by including the CRC field in the payload, so that error control can be avoided.

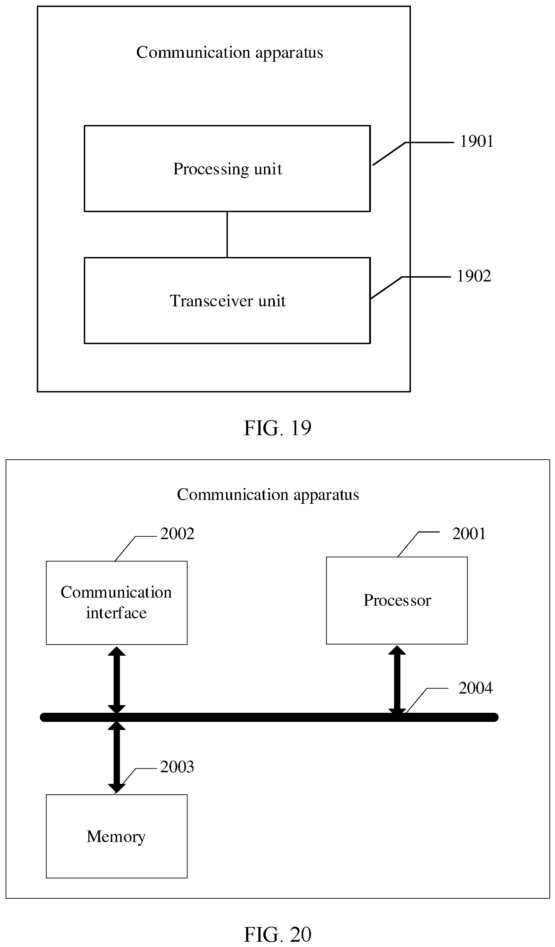

Based on a same technical concept as the method embodiments, an embodiment of this application provides a communication apparatus. A structure of the apparatus may be shown in FIG. 19. The apparatus includes a processing unit 1901 and a transceiver unit 1902.

In an implementation, the communication apparatus may be specifically configured to implement the methods performed by the sending node in the embodiments in FIG. 3 to FIG. 12. The apparatus may be the sending node, or may be a chip, a chipset, or a part configured to perform a related method function in a chip in the sending node. The processing unit 1901 is configured to generate a target code block, where the target code block includes an indicator bit and a payload, the indicator bit includes a first value, a second value, a third value, and a fourth value, the first value is used to indicate that the payload includes a first segment of a data frame, the second value is used to indicate that the payload includes an intermediate segment of the data frame, the third value indicates that the payload includes a last segment of the data frame, and the fourth value is used to indicate that the payload includes non-data information; and the transceiver unit 1902 is configured to send the target code block.

In an embodiment, the processing unit 1901 is specifically configured to: divide the data frame into N segments, where N is an integer greater than 1; and encode the N segments to obtain N code blocks, where the N code blocks include a target code block, and if payload of the target code block includes a first segment in the N segments, an indicator bit of the target code block is a first value; if the payload of the target code block includes the n^{th} segment in the N segments, the indicator bit of the target code block is a second value, and n is an integer greater than 1 and less than N; or if the payload of the target code block includes the N^{th} segment in the N segments, the indicator bit of the target code block is a third value.

For example, the non-data information includes at least one of the following: a padding bit, a sub-indicator bit, and control information.

Optionally, if the bit carried in the payload is the padding bit, the indicator bit is a fourth value.

Optionally, the sub-indicator bit is used to indicate that the payload carries the physical layer padding bit; or the sub-indicator bit is used to indicate that the payload carries the control information; or the sub-indicator bit is used to indicate that the payload carries the data frame.

For example, the type of the control information includes at least one of the following: block identification information, transmission acknowledgment information, intermittent test information, sleep information, and link retraining information.

In an example description, if the payload carries the control information, the payload further includes a CRC field used for check protection.

In another implementation, the communication apparatus may be specifically configured to implement the methods performed by the sending node in the embodiments in FIG. 13 to FIG. 18. The apparatus may be the sending node itself, or may be a chip, a chip set, or a part of a chip in the sending node that is configured to perform a related method function. The processing unit 1901 is configured to generate a target code block, where the target code block includes an indicator bit and a payload, the indicator bit includes a first value and a second value, the first value is used to indicate that the payload includes one segment of the first data frame, the second value is used to indicate that the payload includes non-data information, and if the indicator bit is the second value, the payload includes a sub-indicator bit.

The sub-indicator bit is used to indicate at least one of the following information:
the next code block of the target code block carries the first segment of the first data frame;
the previous code block of the target code block carries the last segment of the first data frame;
a bit carried in the payload of the target code block is a physical layer padding bit;
the payload of the target code block carries control information;
the payload of the target code block carries the first data frame; and
the first data frame and at least one second data frame are spliced in the payload of the target code block.

The transceiver unit 1902 is configured to send the target code block.

For example, if the next code block of the target code block carries the first segment of the first data frame, the bit carried in the payload is a physical layer padding bit, and the sub-indicator bit indicates that the next code block of the target code block carries the first segment of the first data frame.

Alternatively, if the previous code block of the target code block carries the last segment of the first data frame, the bit carried in the payload is a physical layer padding bit, and the sub-indicator bit indicates that the previous code block of the target code block carries the last segment of the first data frame.

Alternatively, if the bit carried in the payload of the target code block is the physical layer padding bit, the sub-indicator bit indicates that the bit carried in the payload of the target code block is the physical layer padding bit.

Alternatively, if the payload of the target code block carries the control information, the sub-indicator bit indicates that the payload carries the control information. Optionally, the sub-control bit further indicates a type of the control information.

Alternatively, if the payload of the target code block carries the first data frame, the sub-indicator bit indicates that the payload of the target code block carries the first data frame.

Alternatively, if the payload of the target code block carries all or a part of data of the first data frame and all or a part of data of the at least one second data frame, the sub-indicator bit indicates that the first data frame and the at least one second data frame are spliced.

Optionally, a type of the control information includes at least one of the following: block identification information, transmission acknowledgment information, intermittent test information, sleep information, and link retraining information.

In an embodiment, the processing unit 1901 is specifically configured to: divide the first data frame into N segments, where N is an integer greater than 1; and encode the N data blocks to obtain N+2 code blocks, where the N+2 code blocks include a target code block, and if the target code block is a first code block in the N+2 code blocks, an indicator bit of the target code block is a second value, and a sub-indicator bit is used to indicate that a next code block of the target code block carries the first segment of the first data frame; if the target code block is an n^{th} code block in the N+2 code blocks, an indicator bit of the target code block is a first value, and n is an integer greater than 1 and less than N+2; or if the target code block is an (N+2)^{th} code block in the N+2 code blocks, an indicator bit of the target code block is a second value, and a sub-indicator bit is used to indicate that a previous code block of the target code block carries the last segment of the first data frame.

For example, if the sub-indicator bit indicates the type of the control information included in the payload of the target code block, the payload includes a CRC field used for check protection; and/or if the sub-indicator bit indicates that a next code block of the target code block carries the first segment of the first data frame, or the sub-indicator bit indicates that a previous code block of the target code block carries the last segment of the first data frame, the payload includes a CRC field used for check protection.

Optionally, the indicating, by the sub-indicator bit, that the first data frame and the at least one second data frame are spliced includes: further indicating, by the sub-indicator bit, a boundary location of the first data frame and the at least one second data frame in the payload.

In an example description, all or a part of data of the first data frame and all or a part of data of the at least one second data frame include a first segment of one second data frame and the first data frame, where the first segment is after the first data frame.

Alternatively, all or a part of data of the first data frame and all or a part of data of the at least one second data frame include: a first segment of one second data frame and a last segment of the first data frame, where the first segment is after the last segment.

Alternatively, all or a part of data of the first data frame and all or a part of data of the at least one second data frame include: the last segment of the first data frame and the at least one second data frame, where the at least one second data frame is after the last segment.

Alternatively, all or a part of data in the first data frame and all or a part of data in the at least one second data frame include: the first data frame and the at least one second data frame, where the at least one second data frame is after the first data frame.

Optionally, an interframe space exists between two adjacent data frames in the first data frame and the at least one second data frame.

In yet another implementation, the communication apparatus may be specifically configured to implement the methods performed by the receiving node in the embodiments in FIG. 3 to FIG. 12. The apparatus may be the receiving node itself, or may be a chip, a chip set, or a part of a chip in the receiving node that is configured to perform a related method function. The transceiver unit 1902 is configured to receive a target code block, where the target code block includes an indicator bit and a payload, the indicator bit includes a first value, a second value, a third value, and a fourth value, the first value is used to indicate that the payload includes a first segment of a data frame, the second value is used to indicate that the payload includes an intermediate segment of the data frame, the third value indicates that the payload includes a last segment of the data frame, and the fourth value is used to indicate that the payload includes non-data information; and the processing unit 1901 is configured to parse the target code block.

In an embodiment, the processing unit 1901 is specifically configured to: if the indicator bit of the target code block is the first value, determining that the segment carried in the payload of the target code block is the first segment of the data frame; or if the indicator bit of the target code block is the second value, determining that the segment carried in the payload of the target code block is the intermediate segment of the data frame; if the indicator bit of the target code block is the third value, determining that the segment carried in the payload of the target code block is the last segment of the data frame.

For example, the non-data information includes at least one of the following: a padding bit, a sub-indicator bit, and control information.

Optionally, if the bit carried in the payload is the padding bit, the indicator bit is a fourth value.

Optionally, the sub-indicator bit is used to indicate that the payload carries the physical layer padding bit; or the sub-indicator bit is used to indicate that the payload carries the control information; or the sub-indicator bit is used to indicate that the payload carries the data frame.

For example, the type of the control information includes at least one of the following: block identification information, transmission acknowledgment information, intermittent test information, sleep information, and link retraining information.

In an example description, if the payload carries the control information, the payload further includes a CRC field used for check protection.

In still another implementation, the communication apparatus may be specifically configured to implement the methods performed by the receiving node in the embodiments in FIG. 13 to FIG. 18. The apparatus may be the receiving node itself, or may be a chip, a chip set, or a part of a chip in the receiving node that is configured to perform a related method function. The transceiver unit 1902 is configured to receive a target code block, where the target code block includes an indicator bit and a payload, the indicator bit includes a first value and a second value, the first value is used to indicate that the payload includes one segment of the first data frame, the second value is used to indicate that the payload includes non-data information, and if the indicator bit is the second value, the payload includes a sub-indicator bit.

The sub-indicator bit is used to indicate at least one of the following information:
the next code block of the target code block carries the first segment of the first data frame;
the previous code block of the target code block carries the last segment of the first data frame;
a bit carried in the payload of the target code block is a physical layer padding bit;
the payload of the target code block carries control information;
the payload of the target code block carries the first data frame; and
the first data frame and at least one second data frame are spliced in the payload of the target code block.

The processing unit 1901 is configured to parse the target code block.

For example, if the next code block of the target code block carries the first segment of the first data frame, the bit carried in the payload is a physical layer padding bit, and the sub-indicator bit indicates that the next code block of the target code block carries the first segment of the first data frame.

Alternatively, if the previous code block of the target code block carries the last segment of the first data frame, the bit carried in the payload is a physical layer padding bit, and the sub-indicator bit indicates that the previous code block of the target code block carries the last segment of the first data frame.

Alternatively, if the bit carried in the payload of the target code block is the physical layer padding bit, the sub-indicator bit indicates that the bit carried in the payload of the target code block is the physical layer padding bit.

Alternatively, if the payload of the target code block carries the control information, the sub-indicator bit indicates that the payload carries the control information. Optionally, the sub-control bit further indicates a type of the control information.

Alternatively, if the payload of the target code block carries the first data frame, the sub-indicator bit indicates that the payload of the target code block carries the first data frame.

Alternatively, if the payload of the target code block carries all or a part of data of the first data frame and all or a part of data of the at least one second data frame, the sub-indicator bit indicates that the first data frame and the at least one second data frame are spliced.

Optionally, a type of the control information includes at least one of the following: block identification information, transmission acknowledgment information, intermittent test information, sleep information, and link retraining information.

In an embodiment, the processing unit 1901 is specifically configured to: if the indicator bit of the target code block is the second value and the sub indicator bit is used to indicate that the next code block of the target code block carries the first segment of the first data frame, determining that the segment carried in the next code block of the target code block is the first segment of the first data frame; if the indicator bit of the target code block is the first value, determining that a segment carried in the payload of the target code block is an intermediate segment of the first data frame; or if the indicator bit of the target code block is the second value and the sub-indicator bit is used to indicate that a previous code block of the target code block carries a last segment of the first data frame, determining that a segment carried in a previous code block of the target code block is the last segment of the first data frame.

For example, if the sub-indicator bit indicates the type of the control information included in the payload of the target code block, the payload includes a CRC field used for check protection; and/or if the sub-indicator bit indicates that a next code block of the target code block carries the first segment of the first data frame, or the sub-indicator bit indicates that a previous code block of the target code block carries the last segment of the first data frame, the payload includes a CRC field used for check protection.

Optionally, the indicating, by the sub-indicator bit, that the first data frame and the at least one second data frame are spliced includes: further indicating, by the sub-indicator bit, a boundary location of the first data frame and the at least one second data frame in the payload.

In an example description, all or a part of data of the first data frame and all or a part of data of the at least one second data frame include a first segment of one second data frame and the first data frame, where the first segment is after the first data frame.

Alternatively, all or a part of data of the first data frame and all or a part of data of the at least one second data frame include: a first segment of one second data frame and a last segment of the first data frame, where the first segment is after the last segment.

Alternatively, all or a part of data of the first data frame and all or a part of data of the at least one second data frame include: the last segment of the first data frame and the at least one second data frame, where the at least one second data frame is after the last segment.

Alternatively, all or a part of data in the first data frame and all or a part of data in the at least one second data frame include: the first data frame and the at least one second data frame, where the at least one second data frame is after the first data frame.

Optionally, an interframe space exists between two adjacent data frames in the first data frame and the at least one second data frame.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

In a possible manner, the communication apparatus may be shown in FIG. 20. The apparatus may be a sending node or a chip in a sending node. The apparatus may include a processor 2001, a communication interface 2002, and a memory 2003. The processing unit 1901 may be the processor 2001. The transceiver unit 1902 may be the communication interface 2002.

The processor 2001 may be a CPU, a digital processing unit, or the like. The communication interface 2002 may be a transceiver, an interface circuit like a transceiver circuit, a transceiver chip, or the like. The apparatus further includes a memory 2003, configured to store a program executed by the processor 2001. The memory 2003 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory 2003 is any other medium that can carry or store expected program code in a form of an instruction structure or a data structure and that can be accessed by a computer, but is not limited thereto.

The processor 2001 is configured to execute the program code stored in the memory 2003, and is specifically configured to perform actions of the foregoing processing unit 1901. Details are not described herein again in this application. The communication interface 2002 is specifically configured to perform an action of the transceiver unit 1902. Details are not described herein again in this application.

A specific connection medium between the communication interface 2002, the processor 2001, and the memory 2003 is not limited in embodiments of this application. In embodiments of this application, the memory 2003, the processor 2001, and the communication interface 2002 are connected by using a bus 2004 in FIG. 20. The bus is represented by using a bold line in FIG. 20. A manner of connection between other components is merely an example for description, and is not limited thereto. The bus may include an address bus, a data bus, a control bus, and the like. For ease of representation, only one thick line is for representing the bus in FIG. 20, but this does not mean that there is only one bus or only one type of bus.

An embodiment of this application further provides a communication system, including a communication apparatus configured to implement functions of the sending node in the embodiments in FIG. 3 to FIG. 12 and a communication apparatus configured to implement functions of the receiving node in the embodiments in FIG. 3 to FIG. 12.

An embodiment of this application further provides a communication system, including a communication apparatus configured to implement functions of the sending node in the embodiments in FIG. 13 to FIG. 18 and a communication apparatus configured to implement functions of the receiving node in the embodiments in FIG. 13 to FIG. 18.

An embodiment of this application further provides a computer-readable storage medium, configured to store computer software instructions that need to be executed by the foregoing processor, and the computer software instructions include a program that needs to be executed by the foregoing processor.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A line coding method, wherein the method comprises:
generating a target code block, wherein the target code block comprises an indicator bit and a payload, the indicator bit comprises a first value, a second value, a third value, and a fourth value, the first value is used to indicate that the payload comprises the first segment of a data frame, the second value is used to indicate that the payload comprises an intermediate segment of the data frame, the third value indicates that the payload comprises the last segment of the data frame, and the fourth value is used to indicate that the payload comprises non-data information; and
sending the target code block.

2. The method according to claim 1, wherein the generating a target code block comprises:
dividing the data frame into N segments, wherein N is an integer greater than 1; and
encoding the N segments to obtain N code blocks, wherein the N code blocks comprise the target code block, and if the payload of the target code block comprises the first segment in the N segments, the indicator bit of the target code block is the first value; or if the payload of the target code block comprises an n^{th} segment in the N segments, the indicator bit of the target code block is the second value, and n is an integer greater than 1 and less than N; or if the payload of the target code block comprises an N^{th} segment in the N segments, the indicator bit of the target code block is the third value.

3. The method according to claim 1, wherein the non-data information comprises at least one of the following: a padding bit, a sub-indicator bit, and control information.

4. The method according to claim 3, wherein if a bit carried in the payload is the padding bit, the indicator bit is the fourth value.

5. The method according to claim 3, wherein the sub-indicator bit is used to indicate that the payload carries the physical layer padding bit;
the sub-indicator bit is used to indicate that the payload carries the control information; or
the sub-indicator bit is used to indicate that the payload carries the data frame.

6. The method according to claim 5, wherein a type of the control information comprises at least one of the following: block identification information, transmission acknowledgment information, intermittent test information, sleep information, and link retraining information.

7. The method according to claim 5 or 6, wherein if the payload carries the control information, the payload further comprises a cyclic redundancy check CRC field used for check protection.

8. A line coding method, wherein the method comprises:
generating a target code block, wherein the target code block comprises an indicator bit and a payload, the indicator bit comprises a first value and a second value, the first value is used to indicate that the payload comprises one segment of a first data frame, and the second value is used to indicate that the payload comprises non-data information; and if the indicator bit is the second value, the payload comprises a sub-indicator bit, and the sub-indicator bit is used to indicate at least one of the following information:
a next code block of the target code block carries the first segment of the first data frame;
a previous code block of the target code block carries the last segment of the first data frame;
a bit carried in the payload of the target code block is a physical layer padding bit;
the payload of the target code block carries control information;
the payload of the target code block carries the first data frame; and
the first data frame and at least one second data frame are spliced in the payload of the target code block; and
sending the target code block.

9. The method according to claim 8, wherein if the next code block of the target code block carries the first segment of the first data frame, the bit carried in the payload is the physical layer padding bit, and the sub-indicator bit indicates that the next code block of the target code block carries the first segment of the first data frame;
if the previous code block of the target code block carries the last segment of the first data frame, the bit carried in the payload is the physical layer padding bit, and the sub-indicator bit indicates that the previous code block of the target code block carries the last segment of the first data frame;
if the bit carried in the payload of the target code block is the physical layer padding bit, the sub-indicator bit indicates that the bit carried in the payload of the target code block is the physical layer padding bit;
if the payload of the target code block carries the control information, the sub-indicator bit indicates that the payload of the target code block carries the control information;
if the payload of the target code block carries the first data frame, the sub-indicator bit indicates that the payload of the target code block carries the first data frame; or
if the payload of the target code block carries all or a part of data of the first data frame and all or a part of data of the at least one second data frame, the sub-indicator bit indicates that the first data frame and the at least one second data frame are spliced.

10. The method according to claim 8 or 9, wherein a type of the control information comprises at least one of the following: block identification information, transmission acknowledgment information, intermittent test information, sleep information, and link retraining information.

11. The method according to any one of claims 8 to 10, wherein the generating a target code block comprises:
dividing the first data frame into N segments, wherein N is an integer greater than 1; and
encoding the N data blocks to obtain N+2 code blocks, wherein the N+2 code blocks comprise the target code block, and if the target code block is the first code block in the N+2 code blocks, the indicator bit of the target code block is the second value, and the sub-indicator bit is used to indicate that the next code block of the target code block carries the first segment of the first data frame; if the target code block is an n^{th} code block in the N+2 code blocks, the indicator bit of the target code block is the first value, and n is an integer greater than 1 and less than N+2; or if the target code block is an (N+2)^{th} code block in the N+2 code blocks, the indicator bit of the target code block is the second value, and the sub-indicator bit is used to indicate that the previous code block of the target code block carries the last segment of the first data frame.

12. The method according to any one of claims 8 to 11, wherein if the sub-indicator bit indicates that the payload of the target code block carries the control information, the payload comprises a cyclic redundancy check CRC field used for check protection;
and/or
if the sub-indicator bit indicates that the next code block of the target code block carries the first segment of the first data frame, or the sub-indicator bit indicates that the previous code block of the target code block carries the last segment of the first data frame, the payload comprises a CRC field used for check protection.

13. The method according to any one of claims 8 to 12, wherein that the sub-indicator bit indicates that the first data frame and the at least one second data frame are spliced comprises: the sub-indicator bit further indicates a boundary location of the first data frame and the at least one second data frame in the payload.

14. The method according to claim 9, wherein all or a part of data of the first data frame and all or a part of data of the at least one second data frame comprise:
the first segment of one second data frame and the first data frame, wherein the first segment is after the first data frame;
the first segment of one second data frame and the last segment of the first data frame, wherein the first segment is after the last segment;
the last segment of the first data frame and the at least one second data frame, wherein the at least one second data frame is after the last segment; or
the first data frame and the at least one second data frame, wherein the at least one second data frame is after the first data frame.

15. The method according to any one of claims 8 to 14, wherein there is an interframe space between two adjacent data frames in the first data frame and the at least one second data frame.

16. A line coding method, wherein the method comprises:
receiving a target code block, wherein the target code block comprises an indicator bit and a payload, the indicator bit comprises a first value, a second value, a third value, and a fourth value, the first value is used to indicate that the payload comprises the first segment of a data frame, the second value is used to indicate that the payload comprises an intermediate segment of the data frame, the third value indicates that the payload comprises the last segment of the data frame, and the fourth value is used to indicate that the payload comprises non-data information; and
parsing the target code block.

17. The method according to claim 16, wherein the parsing the target code block comprises:
if the indicator bit of the target code block is the first value, determining that a segment carried in the payload of the target code block is the first segment of the data frame;
if the indicator bit of the target code block is the second value, determining that a segment carried in the payload of the target code block is the intermediate segment of the data frame; or
if the indicator bit of the target code block is the third value, determining that a segment carried in the payload of the target code block is the last segment of the data frame.

18. A line coding method, wherein the method comprises:
receiving a target code block, wherein the target code block comprises an indicator bit and a payload, the indicator bit comprises a first value and a second value, the first value is used to indicate that the payload comprises one segment of a first data frame, and the second value is used to indicate that the payload comprises non-data information; and if the indicator bit is the second value, the payload comprises a sub-indicator bit, and the sub-indicator bit is used to indicate at least one of the following information:
a next code block of the target code block carries the first segment of the first data frame;
a previous code block of the target code block carries the last segment of the first data frame;
a bit carried in the payload of the target code block is a physical layer padding bit;
the payload of the target code block carries control information;
the payload of the target code block carries the first data frame; and
the first data frame and at least one second data frame are spliced in the payload of the target code block; and
parsing the target code block.

19. The method according to claim 18, wherein the parsing the target code block comprises:
if the indicator bit of the target code block is the second value, and the sub-indicator bit is used to indicate that the next code block of the target code block carries the first segment of the first data frame, determining that a segment carried in the next code block of the target code block is the first segment of the first data frame;
if the indicator bit of the target code block is the first value, determining that a segment carried in the payload of the target code block is an intermediate segment of the first data frame; or
if the indicator bit of the target code block is the second value, and the sub-indicator bit is used to indicate that the previous code block of the target code block carries the last segment of the first data frame, determining that a segment carried in the previous code block of the target code block is the last segment of the first data frame.

20. A communication apparatus, wherein the apparatus comprises:
a processing unit, configured to generate a target code block, wherein the target code block comprises an indicator bit and a payload, the indicator bit comprises a first value, a second value, a third value, and a fourth value, the first value is used to indicate that the payload comprises the first segment of a data frame, the second value is used to indicate that the payload comprises an intermediate segment of the data frame, the third value indicates that the payload comprises the last segment of the data frame, and the fourth value is used to indicate that the payload comprises non-data information; and
a transceiver unit, configured to send the target code block.

21. The apparatus according to claim 20, wherein the processing unit is specifically configured to:
divide the data frame into N segments, wherein N is an integer greater than 1; and
encode the N segments to obtain N code blocks, wherein the N code blocks comprise the target code block, and if the payload of the target code block comprises the first segment in the N segments, the indicator bit of the target code block is the first value; or if the payload of the target code block comprises an n^{th} segment in the N segments, the indicator bit of the target code block is the second value, and n is an integer greater than 1 and less than N; or if the payload of the target code block comprises an N^{th} segment in the N segments, the indicator bit of the target code block is the third value.

22. The apparatus according to claim 20, wherein the non-data information comprises at least one of the following: a padding bit, a sub-indicator bit, and control information.

23. The apparatus according to claim 22, wherein if a bit carried in the payload is the padding bit, the indicator bit is the fourth value.

24. The apparatus according to claim 22, wherein the sub-indicator bit is used to indicate that the payload carries the physical layer padding bit;
the sub-indicator bit is used to indicate that the payload carries the control information; or
the sub-indicator bit is used to indicate that the payload carries the data frame.

25. The apparatus according to claim 24, wherein a type of the control information comprises at least one of the following: block identification information, transmission acknowledgment information, intermittent test information, sleep information, and link retraining information.

26. The apparatus according to claim 24 or 25, wherein if the payload carries the control information, the payload further comprises a cyclic redundancy check CRC field used for check protection.

27. A communication apparatus, wherein the apparatus comprises:
a processing unit, configured to generate a target code block, wherein the target code block comprises an indicator bit and a payload, the indicator bit comprises a first value and a second value, the first value is used to indicate that the payload comprises one segment of a first data frame, and the second value is used to indicate that the payload comprises non-data information; and if the indicator bit is the second value, the payload comprises a sub-indicator bit, and the sub-indicator bit is used to indicate at least one of the following information:
a next code block of the target code block carries the first segment of the first data frame;
a previous code block of the target code block carries the last segment of the first data frame;
a bit carried in the payload of the target code block is a physical layer padding bit;
the payload of the target code block carries control information;
the payload of the target code block carries the first data frame; and
the first data frame and at least one second data frame are spliced in the payload of the target code block; and
a transceiver unit, configured to send the target code block.

28. The apparatus according to claim 27, wherein if the next code block of the target code block carries the first segment of the first data frame, the bit carried in the payload is the physical layer padding bit, and the sub-indicator bit indicates that the next code block of the target code block carries the first segment of the first data frame;
if the previous code block of the target code block carries the last segment of the first data frame, the bit carried in the payload is the physical layer padding bit, and the sub-indicator bit indicates that the previous code block of the target code block carries the last segment of the first data frame;
if the bit carried in the payload of the target code block is the physical layer padding bit, the sub-indicator bit indicates that the bit carried in the payload of the target code block is the physical layer padding bit;
if the payload of the target code block carries the control information, the sub-indicator bit indicates that the payload of the target code block carries the control information;
if the payload of the target code block carries the first data frame, the sub-indicator bit indicates that the payload of the target code block carries the first data frame; or
if the payload of the target code block carries all or a part of data of the first data frame and all or a part of data of the at least one second data frame, the sub-indicator bit indicates that the first data frame and the at least one second data frame are spliced.

29. The apparatus according to claim 27 or 28, wherein a type of the control information comprises at least one of the following: block identification information, transmission acknowledgment information, intermittent test information, sleep information, and link retraining information.

30. The apparatus according to any one of claims 27 to 29, wherein the processing unit is specifically configured to:
divide the first data frame into N segments, wherein N is an integer greater than 1; and
encode the N data blocks to obtain N+2 code blocks, wherein the N+2 code blocks comprise the target code block, and if the target code block is the first code block in the N+2 code blocks, the indicator bit of the target code block is the second value, and the sub-indicator bit is used to indicate that the next code block of the target code block carries the first segment of the first data frame; if the target code block is an n^{th} code block in the N+2 code blocks, the indicator bit of the target code block is the first value, and n is an integer greater than 1 and less than N+2; or if the target code block is an (N+2)^{th} code block in the N+2 code blocks, the indicator bit of the target code block is the second value, and the sub-indicator bit is used to indicate that the previous code block of the target code block carries the last segment of the first data frame.

31. The apparatus according to any one of claims 27 to 30, wherein if the sub-indicator bit indicates that the payload of the target code block carries the control information, the payload comprises a cyclic redundancy check CRC field used for check protection;
and/or
if the sub-indicator bit indicates that the next code block of the target code block carries the first segment of the first data frame, or the sub-indicator bit indicates that the previous code block of the target code block carries the last segment of the first data frame, the payload comprises a CRC field used for check protection.

32. The apparatus according to any one of claims 27 to 31, wherein that the sub-indicator bit indicates that the first data frame and the at least one second data frame are spliced comprises: the sub-indicator bit further indicates a boundary location of the first data frame and the at least one second data frame in the payload.

33. The apparatus according to claim 28, wherein all or a part of data of the first data frame and all or a part of data of the at least one second data frame comprise: the first segment of one second data frame and the first data frame, wherein the first segment is after the first data frame;
the first segment of one second data frame and the last segment of the first data frame, wherein the first segment is after the last segment;
the last segment of the first data frame and the at least one second data frame, wherein the at least one second data frame is after the last segment; or
the first data frame and the at least one second data frame, wherein the at least one second data frame is after the first data frame.

34. The apparatus according to any one of claims 27 to 33, wherein there is an interframe space between two adjacent data frames in the first data frame and the at least one second data frame.

35. A communication apparatus, wherein the apparatus comprises:
a transceiver unit, configured to receive a target code block, wherein the target code block comprises an indicator bit and a payload, the indicator bit comprises a first value, a second value, a third value, and a fourth value, the first value is used to indicate that the payload comprises the first segment of a data frame, the second value is used to indicate that the payload comprises an intermediate segment of the data frame, the third value indicates that the payload comprises the last segment of the data frame, and the fourth value is used to indicate that the payload comprises non-data information; and
a processing unit, configured to parse the target code block.

36. The apparatus according to claim 35, wherein the processing unit is specifically configured to:
if the indicator bit of the target code block is the first value, determine that a segment carried in the payload of the target code block is the first segment of the data frame;
if the indicator bit of the target code block is the second value, determine that a segment carried in the payload of the target code block is the intermediate segment of the data frame; or
if the indicator bit of the target code block is the third value, determining that a segment carried in the payload of the target code block is the last segment of the data frame.

37. A communication apparatus, wherein the apparatus comprises:
a transceiver unit, configured to receive a target code block, wherein the target code block comprises an indicator bit and a payload, the indicator bit comprises a first value and a second value, the first value is used to indicate that the payload comprises one segment of a first data frame, and the second value is used to indicate that the payload comprises non-data information; and if the indicator bit is the second value, the payload comprises a sub-indicator bit, and the sub-indicator bit is used to indicate at least one of the following information:
a next code block of the target code block carries the first segment of the first data frame;
a previous code block of the target code block carries the last segment of the first data frame;
a bit carried in the payload of the target code block is a physical layer padding bit;
the payload of the target code block carries control information;
the payload of the target code block carries the first data frame; and
the first data frame and at least one second data frame are spliced in the payload of the target code block; and
a processing unit, configured to parse the target code block.

38. The apparatus according to claim 37, wherein the processing unit is specifically configured to:
if the indicator bit of the target code block is the second value, and the sub-indicator bit is used to indicate that the next code block of the target code block carries the first segment of the first data frame, determine that a segment carried in the next code block of the target code block is the first segment of the first data frame;
if the indicator bit of the target code block is the first value, determine that a segment carried in the payload of the target code block is an intermediate segment of the first data frame; or
if the indicator bit of the target code block is the second value, and the sub-indicator bit is used to indicate that the previous code block of the target code block carries the last segment of the first data frame, determine that a segment carried in the previous code block of the target code block is the last segment of the first data frame.

39. A computer-readable storage medium, wherein the computer-readable storage medium stores a program or instructions; and when the program or the instructions is or are read and executed by one or more processors, the method according to any one of claims 1 to 15 is implemented, or when the program or the instructions is or are read and executed by one or more processors, the method according to any one of claims 16 to 19 is implemented.

40. A computer program product, wherein when the computer program product runs on a device, the device is enabled to perform the method according to any one of claims 1 to 7, or the device is enabled to perform the method according to any one of claims 8 to 15, or the device is enabled to perform the method according to claim 16 or 17, or the device is enabled to perform the method according to claim 18 or 19.
